# EUROPEAN PATENT APPLICATION

(11) **EP 4 648 432 A1**
(43) Date of publication of application: **12.11.2025**
(21) Application number: 24864410.6
(22) Date of filing: 21.08.2024
(51) Int. Cl.: H04N 23/611, H04M 1/02

(54) **METHOD AND APPARATUS FOR SCREEN SWITCHING DURING PHOTOGRAPHING PROCESS**

(30) Priority: 11.09.2023 CN 202311172043
(71) Applicant: Honor Device Co., Ltd., Shenzhen, Guangdong 518040 (CN)
(72) Inventor: PENG, Yalong, Shenzhen, Guangdong 518040 (CN); ZHANG, He, Shenzhen, Guangdong 518040 (CN); LI, Chunjie, Shenzhen, Guangdong 518040 (CN)
(74) Representative: Thun, Clemens
(86) International application number: PCT/CN2024/113674
(87) International publication number: WO 2025/055687

(57) **Abstract**

This application provides a screen switching method and apparatus in a shooting process. The method includes: running a camera application on a first screen of an electronic device in an outward-folded state; caching, based on a preset caching mechanism when a shooting mode of the camera application is a selfie mode or a dual-scene mode, a plurality of frames of images captured by a first camera; reading, when a flip event is detected, at least one frame of image from a plurality of frames of images that are cached before the flip event; and switching, when the at least one frame of image that is read includes a human face satisfying a preset condition, the camera application to a second screen for running, and capturing an image by a second camera, where an orientation of the second camera is the same as an orientation of the second screen. In the solution, in a shooting process, screen switching is mainly performed by caching an image obtained before a flip, and then determining, based on a photo-taking mode and a human face in the image that is cached before the flip. Screen switching may not be performed manually, which is more intelligent. Therefore, user experience is improved.

## Description

This application claims priority to Chinese Patent Application No. 202311172043.3, filed with the China National Intellectual Property Administration on September 11, 2023 and entitled "SCREEN SWITCHING METHOD AND APPARATUS IN SHOOTING PROCESS", which is incorporated herein by reference in its entirety.

### TECHNICAL FIELD

This application relates to the field of electronic device technologies, and in particular, to a screen switching method and apparatus in a shooting process.

### BACKGROUND

With the development of technologies, foldable-screen electronic devices have emerged, leading to diversified screen working states. For example, an electronic device may be in a folded state, or may be in a full-screen state. Foldable is further divided into outward foldable and inward foldable. After being outward folded, two screens are in a back-to-back state, while after being inward folded, the two screens are in a face-to-face state. However, after being inward folded, the two screens cannot be seen by a user. For the screens being outward folded, the user may see one of the two back-to-back screens. As a result, for an electronic device in an outward-folded state, a unique operation behavior, that is, a flip behavior, occurs. When the user flips the electronic device, a screen facing a human face of the user is changed. To be specific, the screen that the user sees is changed from one of the two back-to-back screens to the other.

For shooting scenes such as photo-taking or video recording on the electronic device in the outward-folded state, the user expects to quickly switch to the other screen for shooting continuously after the flip behavior occurs. For example, when the user takes a selfie on a primary screen, if the user considers that a front-facing camera is not clear enough and expects to clearly see the face of the user via a rear-facing camera, the user flips the electronic device, to enable a secondary screen to face the face of the user. In this case, the user expects to continue the shooting process. However, because a camera application is still running on the primary screen instead of the secondary screen and the user faces the secondary screen, the user cannot perform, on the secondary screen, interaction operations such as tapping on a shooting control, causing interruption of the shooting. If the user expects to switch to the secondary screen to continue shooting, the user needs to manually switch the screen based on preset steps of manually switching the screen (screen switching) on the electronic device, and manually select, after screen switching, a specific camera for shooting. This causes complex operations. In addition, if the user records a video and an operation time is long, more images that the user does not expect to record are recorded during the video recording, and even the video recording may be interrupted.

Therefore, how to resolve a problem of complex operations of manual screen switching in the shooting process, to better continue the shooting after the screen is flipped is an urgent technical problem to be resolved.

### SUMMARY

This application provides a screen switching method and apparatus in a shooting process, to resolve complex operations of manual screen switching in the shooting process, thereby better continuing the shooting after a screen is flipped, and improving user experience.

According to a first aspect, a screen switching method in a shooting process is provided. The method includes: running a camera application on a first screen of an electronic device in an outward-folded state; caching, based on a preset caching mechanism when a shooting mode of the camera application is a selfie mode or a dual-scene mode, a plurality of frames of images captured by a first camera; reading, when a flip event is detected, at least one frame of image from a plurality of frames of images that are cached before the flip event; and switching, when the at least one frame of image includes a human face satisfying a preset condition, the camera application to a second screen for running, and capturing an image by a second camera.

In this solution, an orientation of the first camera is the same as an orientation of the first screen. The flip event is used to indicate an interaction event in which the orientation of the first screen and an orientation of the second screen are swapped by flipping the electronic device. The second screen is a screen of which orientation is opposite to an orientation of the first screen of the electronic device in the outward-folded state. An orientation of the second camera is the same as the orientation of the second screen.

In the solution of this application, in a shooting process, screen switching is mainly performed by caching an image obtained before the flip, and then determining, based on a photo-taking mode and a human face in the image that is cached before the flip. Screen switching may not be performed manually, which is more intelligent. Therefore, user experience is improved.

With reference to the first aspect, in some implementations of the first aspect, the preset caching mechanism may include: when a quantity of images stored in a first storage unit is less than a preset quantity of the first storage unit, after one frame of image to be cached is obtained each time, storing the frame of image in the first storage unit; or
when a quantity of images stored in the first storage unit is equal to a preset quantity of the first storage unit, after one frame of image to be cached is obtained each time, replacing the frame of image with a frame of image having an earliest timestamp in the first storage unit.

Due to the caching mechanism, quantitative caching and the cached image can be updated in real time. This can facilitate subsequent reading, and reduce required storage space on the premise of satisfying the requirement.

When the caching mechanism is combined into the caching step, the "caching, based on a preset caching mechanism when a shooting mode of the camera application is a selfie mode or a dual-scene mode, a plurality of frames of images captured by a first camera" may include: when the quantity of images stored in the first storage unit is less than the preset quantity, after a frame of image to be cached is obtained by the first camera each time, storing the frame of image captured in the first storage unit; or
when the quantity of images stored in the first storage unit is equal to the preset quantity, after a frame of image to be cached is obtained by the first camera each time, replacing the frame of image captured with the frame of image having the earliest timestamp in the first storage unit.

With reference to the first aspect, in some implementations of the first aspect, the caching, based on a preset caching mechanism when a shooting mode of the camera application is a selfie mode or a dual-scene mode, a plurality of frames of images captured by a first camera may include:
in the selfie mode or the dual-scene mode, after the frame of image is captured by the first camera each time, recognizing, through a human face recognition algorithm, information about the human face in the frame of image captured, where the information about the human face includes a quantity of human faces and a size of the human face in the image; and
caching the frame of image and the information about the human face in the frame of image based on the preset caching mechanism.

In this implementation, information about the human face in each frame of image is stored with the frame of image together. Subsequent determining may be performed based on the information about the human face. Caching of the image and the information about the human face does not depend on the triggering of the flip event. Therefore, the detection of the flip event and the caching of the image may be performed synchronously. After the flip event occurs, data that has been stored may be read directly, and recognition does not need to be performed again. This shortens a time of responding to the flip event.

In an example, 0 is used to indicate that no human face exists, and cached with an image including a quantity of human faces greater than or equal to 1. When the quantity of human faces is 0, it indicates that the image does not include the human face. In another example, an image that does not include the human face is not cached.

In an example, after the information about the human face is recognized, only the image including the human face is stored during caching, such that the cached image necessarily includes the human face. In this way, a blurred image, an image that is continuously captured by the first camera when the flip event occurs, and an image captured by another camera are not cached, ensuring that the cached image is the image including the human face. Subsequently, although only one frame of image is read from the cached image, a determining result satisfying an accuracy requirement can be provided.

With reference to the first aspect, in some implementations of the first aspect, the reading, when a flip event is detected, at least one frame of image from a plurality of frames of images that are cached before the flip event may include:
reading, from the plurality of frames of images, one or more frames of images with a shortest time interval from the flip event, where the one or more frames of images that are read are the at least one frame of image.

That is, during reading, an image that is cached at a latest time is read, or no image is cached from a moment at which the flip event occurs. Therefore, starting from the moment, a specific quantity of preceding images are read and used as the at least one frame of image that is read. An image captured at a time closer to the flip event can better reflect a screen switching requirement of the user.

It should be understood that the solution of this application can be implemented by reading only one frame of image. In order to prevent instability, for example, one or more cached frames are blurry due to screen shaking, resulting in inaccuracy of subsequent determining, the quantity is preferably a plurality of frames. An early image shot before the flip may not satisfy a user requirement. Determining performed after reading increases complexity of the processing process, and may also lead to an error in determining. However, when the image is cached, the information about the human face is recognized through the human face recognition algorithm. In this case, only the image including the human face may be stored, and the blurred image, the image captured by the another camera, or the like is not cached, that is, is not read out herein. Therefore, although only one frame of image is read, the frame of image is also sufficient for subsequent determining.

It should be further understood that, in this embodiment of this application, the first camera still captures the image since the flip event occurs until the first camera is deactivated or the shooting mode is changed. In addition, the mode satisfies one of the two. Therefore, during this period, the image captured by the first camera may be cached. In this case, if only the image that is cached before the flip event is considered, interference caused by the image can be eliminated. This improves accuracy of subsequent determining.

In an example, for the at least one frame of image that is read from the plurality of frames of images that are cached before the flip event, a timestamp of the at least one frame of image is later than a timestamp of an image other than the at least one frame of image in the plurality of frames of images that are cached before the flip event. In this example, the timestamp is used to assist in filtering an image that is expected to be read. A recent image is used to determine whether there is a human face. Therefore, a result is more accurate.

With reference to the first aspect, in some implementations of the first aspect, the switching, when the at least one frame of image includes a human face satisfying a preset condition, the camera application to a second screen for running, and capturing an image by a second camera may include:
when it is determined that the shooting mode of the camera application used before the flip is the selfie mode or the dual-scene mode, determining whether the at least one frame of image includes the human face satisfying the preset condition, where the preset condition includes that a quantity of human faces in the at least one frame of image is greater than or equal to a preset value, and/or that a size of at least one human face in the at least one frame of image within a preset threshold range; and
when it is determined that the at least one frame of image includes the human face satisfying the preset condition, switching the camera application to the second screen for running, and capturing the image by the second camera.

In this implementation, there are two items of determining: determining of the shooting mode and determining of the human face, so that more accurate triggering of final screen switching can be ensured, to better satisfy the expectation of the user.

The preset threshold range may be set to a fixed value. For example, based on a statistical interval of the size of the human face and a length interval of an arm (because the flip cannot be performed beyond the arm, the flip action does not need to be considered, and this is not a scenario described in this application), a relative proportion interval of the size of the human face displayed on the screen may be calculated when a selfie is taken. For example, when an arm is in a straightened state, a specific quantity of sizes of the human face displayed on the screen in the selfie mode may be counted. To be specific, in this case, an average value of sizes of human faces of different persons on the screen is taken, and used as a minimum value of the preset threshold range. Under a condition of ensuring the integrity of the human face, during a selfie operation performed in a close range to the screen, a specific quantity of sizes of the human face on the screen may be counted. To be specific, in this case, an average value of sizes of human faces of different persons on the screen is taken, and used as a maximum value of the preset threshold range, to determine a preset threshold of the size of the human face. For another example, if the preset threshold range is greater than or equal to a first size, within the preset threshold range, the size of the human face is equivalent to the size of the human face being greater than or equal to the first size. Although the human face is incompletely displayed on the screen in a particularly close range, determining is not affected provided that the human face is still recognized. In addition, in order to clearly see the screen, the user does not excessively move close to the screen. Therefore, the preset threshold range may not have a maximum value.

With reference to the first aspect, in some implementations of the first aspect, the switching, when the at least one frame of image includes a human face satisfying a preset condition, the camera application to a second screen for running, and capturing an image by a second camera may include:
when it is determined that the shooting mode of the camera application used before the flip is the selfie mode and the at least one frame of image includes the human face satisfying the preset condition, switching the camera application to the second screen for running in the selfie mode, and capturing the image by the second camera.

In this implementation, in the selfie mode, a camera used for shooting is switched from the first camera to the second camera.

With reference to the first aspect, in some implementations of the first aspect, the switching, when the at least one frame of image includes a human face satisfying a preset condition, the camera application to a second screen for running, and capturing an image by a second camera may include:
when it is determined that the shooting mode of the camera application used before the flip is the selfie mode or the dual-scene mode and the at least one frame of image includes the human face satisfying the preset condition, switching the camera application to the second screen for running in the selfie mode, and capturing the image by the second camera.

In this implementation, regardless of the selfie mode or the dual-scene mode, the second camera is directly used for the selfie operation.

With reference to the first aspect, in some implementations of the first aspect, the switching, when the at least one frame of image includes a human face satisfying a preset condition, the camera application to a second screen for running, and capturing an image by a second camera may include:
when it is determined that the shooting mode of the camera application used before the flip is the dual-scene mode, the first camera is used to capture the foreground image, the second camera is used to capture the background image, and at least one frame of image includes the human face satisfying the preset condition, switching the camera application to the second screen for running in the dual-scene mode; and
capturing the foreground image by the second camera, and capturing the background image by the first camera.

With reference to the first aspect, in some implementations of the first aspect, after the flip event is detected, the method further includes:
when it is determined that the shooting mode of the camera application used before the flip is neither the selfie mode nor the dual-scene mode, switching the camera application to the second screen for running in the selfie mode, and capturing the image by the second camera.

If the camera application is not in the selfie mode and the dual-scene mode, the first camera cannot capture the human face. Therefore, determining whether the image includes the human face does not need to be performed, and screen switching can be directly performed by skipping the steps.

With reference to the first aspect, in some implementations of the first aspect, when the camera application running on the first screen supports only the selfie mode, the switching, when the at least one frame of image includes a human face satisfying a preset condition, the camera application to a second screen for running, and capturing an image by a second camera may include:
determining whether the at least one frame of image includes the human face satisfying the preset condition, where the preset condition includes the quantity of human faces and/or the size of the human face; and
when it is determined that the at least one frame of image includes the human face satisfying the preset condition, switching the camera application to the second screen for running in the selfie mode, and capturing the image by the second camera.

In this implementation, when there is only the selfie mode, because all images are selfies, it does not need to determine a specific mode that is used, the human face can be determined directly, and the camera application can continuously run in the selfie mode after screen switching. In practice, this case mainly occurs when the screen is flipped to the secondary screen and then flipped back to the primary screen and the secondary screen only supports the selfie mode. When the screen is flipped back to the primary screen again, the first screen becomes the secondary screen, and the second screen becomes the primary screen.

After the flip event is detected, the method further includes: when it is determined that the shooting mode of the camera application used before the flip is neither the selfie mode nor the dual-scene mode, switching the camera application to the second screen for running in the selfie mode, and capturing the image by the second camera.

If the camera application is not in the selfie mode and the dual-scene mode, the first camera cannot capture the human face. Therefore, determining whether the image includes the human face does not need to be performed, and screen switching can be directly performed by skipping the steps.

With reference to the first aspect, in some implementations of the first aspect, when the first screen is the primary screen, the running a camera application on a first screen of an electronic device in an outward-folded state may include:
in response to a user tapping on a launch control of the camera application on the primary screen, launching and running the camera application on the primary screen.

In this implementation, because the first screen is the primary screen, the camera application is running after being launched. For example, the camera application may be launched by tapping a home screen icon of the camera application. Alternatively, a camera application that is suspended in a background may be hot launched by tapping a snapshot. In other words, the launch control may be either the home screen icon or the snapshot.

It should be understood that, for an electronic device that may directly launch a camera application on a secondary screen, when a first screen is a secondary screen, in response to the user tapping on a launch control of the camera application on the secondary screen, the camera application may also be launched and runs on the secondary screen.

However, for an electronic device that cannot launch a camera application on a secondary screen and can only launch the camera application on a primary screen, when the electronic device launches the camera application, the camera application is launched and runs on the primary screen by default. In this case, the first screen may also be the secondary screen, but running on the secondary screen occurs after a screen switching operation is triggered. The screen switching operation may be manual screen switching, or may be screen switching in the solution of embodiments of this application.

With reference to the first aspect, in some implementations of the first aspect, when the first screen is the secondary screen and the second screen is the primary screen, the camera application is launched on the primary screen, and then switched, in response to a flip event that an orientation of the primary screen and an orientation of the secondary screen are swapped, to the secondary screen for running.

According to a second aspect, an apparatus for performing transition motion effect of screen switching in a shooting process is provided. The apparatus includes a unit that includes software and/or hardware and is configured to perform any one of the methods in the first aspect.

According to a third aspect, an electronic device is provided, including a memory, a processor, and a computer program that is stored in the memory and that is capable of running on the processor, where the electronic device is enabled to implement any method in the first aspect when the processor executes the computer program.

According to a fourth aspect, a chip is provided, where the chip includes a processor, the processor is configured to read and perform a computer program stored in a memory, and when the computer program is executed by the processor, an electronic device where the chip is located may implement any one of the methods in the first aspect.

Optionally, the chip further includes a memory, and the memory is electrically connected to the processor.

Optionally, the chip may further include a communication interface.

According to a fifth aspect, a computer-readable storage medium is provided, where the computer-readable storage medium stores a computer program, and the computer program may implement any method in the first aspect when executed by an electronic device.

According to a sixth aspect, a computer program product is provided, where the computer program product includes a computer program, and the computer program may implement any method in the first aspect when executed by an electronic device.

### BRIEF DESCRIPTION OF THE DRAWING

FIG. 1 is a schematic diagram of a working form of an applicable foldable electronic device according to this application;
FIG. 2 is a schematic diagram of an interface displayed after an electronic device is flipped in a shooting process;
FIG. 3A to FIG. 3D are a schematic diagram of a screen switching result in a shooting process according to an embodiment of this application;
FIG. 4 is a schematic flowchart of a screen switching method in a shooting process according to an embodiment of this application;
FIG. 5 is a schematic diagram of an execution procedure of screen switching in a shooting process according to an embodiment of this application;
FIG. 6 is a schematic diagram of an execution procedure of screen switching in a shooting process according to an embodiment of this application;
FIG. 7A and FIG. 7B are a schematic flowchart of a screen switching method in a shooting process according to an embodiment of this application;
FIG. 8A to FIG. 8D are a schematic diagram of a process in which an electronic device is flipped after screen switching during a selfie;
FIG. 9A to FIG. 9D are a schematic diagram of a process in which an electronic device is flipped after screen switching in a dual-scene shooting process;
FIG. 10 is a schematic diagram of an apparatus for performing transition motion effect of screen switching in a shooting process according to an embodiment of this application;
FIG. 11 is a schematic diagram of a hardware structure of an electronic device according to an embodiment of this application; and
FIG. 12 is a diagram of a hardware structure of another electronic device according to an embodiment of this application.

### DETAILED DESCRIPTION OF EMBODIMENTS

The following describes solutions of embodiments of this application with reference to the accompanying drawings.

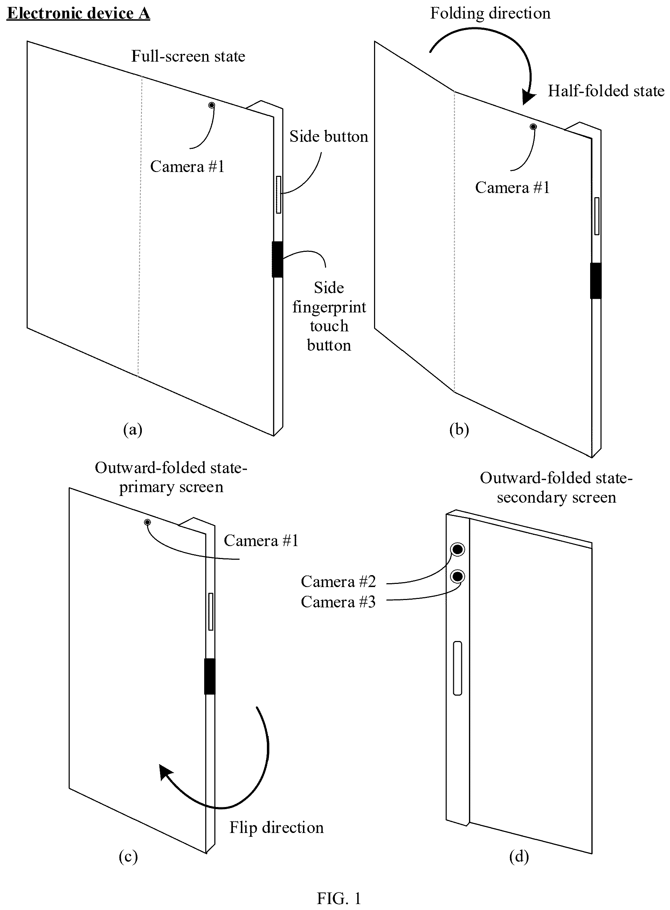

This application is aimed at an electronic device in an outward-folded state. In a scenario in which a flip action occurs in a shooting process, screen switching can be performed automatically after a flip without an interactive operation of a user. This resolves complex operations of manual screen switching in the shooting process, to relatively intelligently continue the shooting after a screen is flipped, thereby improving user experience. The following first describes influence of an outward-folded state and a manual screen switching operation on shooting with reference to FIG. 1 to FIG. 5.

FIG. 1 is a schematic diagram of a working form of an applicable foldable electronic device according to this application. As shown in FIG. 1, a screen of an electronic device A is foldable, and the electronic device A may be a mobile phone, a tablet computer, or the like.

Part (a) of FIG. 1 shows a full-screen state. When a user performs folding in a folding direction shown in part (b) of FIG. 1, a half-folded state shown in part (b) of FIG. 1 appears. It should be noted that, because this application is mainly aimed at an outward-folded state, an example in which the folding direction is only outward folding is used for description. However, it should be understood that an inward folding function may further be available in practice.

When two screens, namely, a primary screen and a secondary screen, are completely in an opposite direction in a back-to-back state, that is, when an included angle between the primary screen and the secondary screen is zero, the outward-folded state is formed. Part (c) of FIG. 1 shows an example of the primary screen in the outward-folded state, and part (d) of FIG. 1 shows an example of the secondary screen in the outward-folded state.

In the outward-folded state, assuming that the user flips the electronic device A in a flip direction shown in part (c) of FIG. 1, an orientation of the primary screen and an orientation of the secondary screen may be swapped. This application is aimed at how to switch the screen in a more intelligent manner after this flip behavior occurs, and enables the user to feel more comfortable in a shooting process.

The electronic device A needs to include two screens of which orientations are opposite to each other after a flip, such as a primary screen and a secondary screen shown in FIG. 1. For inward folding, although the orientations of the two screens are opposite to each other, the user cannot see the screen, and cannot see a shooting interface. Therefore, the inward folding is not applicable to scenarios in the solution of this application.

A shooting function may include photo-taking and video recording. A shooting mode may include a selfie mode, a dual-scene mode, and a single-scene mode, and may also include a multi-scene mode with a quantity of scenes greater than two. The dual-scene mode may be a combination of a foreground scene and a background scene, or a combination of a long-range scene and a short-range scene. The combination of the foreground scene and the background scene is more common.

However, it should be understood that, a photo-taking function does not preclude the dual-scene mode, or video recording is disabled in the selfie mode. In other words, the shooting function and the shooting mode are not mutually exclusive, and during actual application, this depends on the design initial settings of the electronic device A. However, a combination manner does not affect an application of the solution of embodiments of this application.

It should be further understood that, although FIG. 1 shows two rear-facing cameras, in practice, there may be only one rear-facing camera, or may be three and more rear-facing cameras. In practice, there may further be a plurality of front-facing cameras. For the solution of embodiments of this application, there is only at least one front-facing camera and at least one rear-facing camera. In other words, only the primary screen and the secondary screen each include at least one camera of which orientation is the same as the orientation of the primary screen or the orientation of the secondary screen.

In addition, FIG. 1 shows an example in which the front-facing camera is located on the primary screen. However, the front-facing camera does not occupy an area of the primary screen. For example, the front-facing camera may be a retractable camera. The retractable camera is embedded in the electronic device A when not in use, and only protrudes (extends out) from the primary screen when in use.

FIG. 1 is merely an example. In practice, there may be other manual screen switching. In the solution of embodiments of this application, a problem that shooting is not friendly to the user because of manual screen switching after the flip can be resolved. After the solution of embodiments of this application is performed, screen switching does not need to be performed manually after the flip.

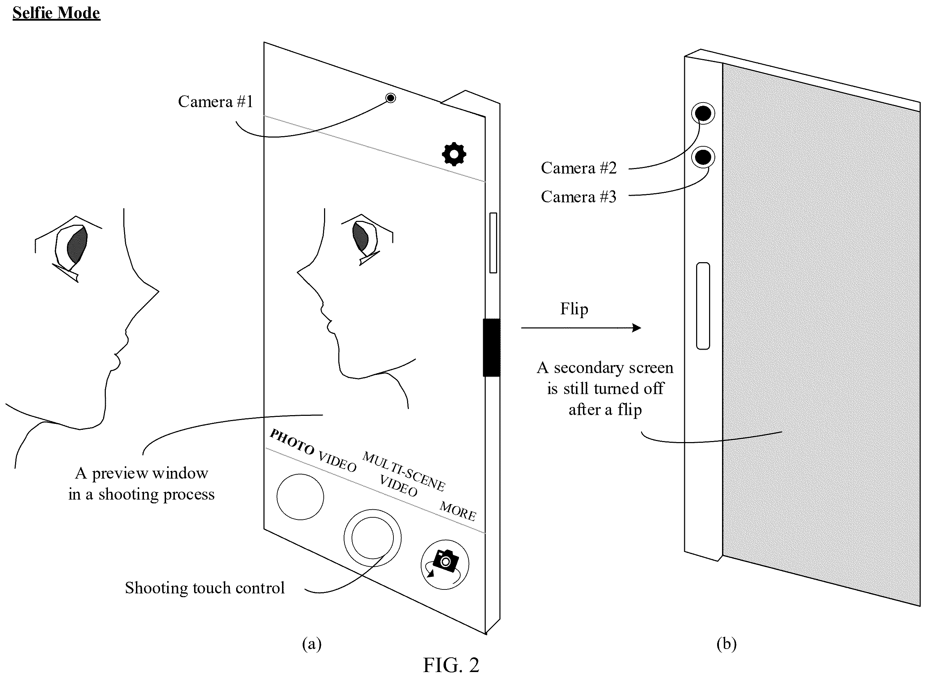

FIG. 2 is a schematic diagram of an interface displayed after an electronic device is flipped in a shooting process. As shown in FIG. 2, in an interface shown in part (a) of FIG. 2, a camera application is running on a primary screen of an electronic device. A user faces the primary screen, and a portrait of the user is displayed in a preview window of the camera application on the primary screen. A camera #1 is used to capture an image, and may be referred to as a front-facing camera. In this case, a photo-taking function is enabled. The front-facing camera is used to capture the portrait of the user through the photo-taking function, and only one preview window displays the portrait of the user. This is also known as a selfie mode. In the selfie mode, the electronic device is necessarily close to the user, and subsequently, the user flips the electronic device. Therefore, a distance between the electronic device and the face of the user is necessarily within an arm of the user. In other words, the distance between the electronic device and the face of the user does not exceed a distance between the electronic device and the face of the user obtained when the user holds the electronic device in a hand and straightens an arm of a hand. The user may trigger photo-taking by tapping on a shooting touch control shown in part (a) of FIG. 2. In this case, assuming that the user flips the electronic device, a secondary screen faces the user, as shown in part (b) of FIG. 2. When the flip is just completed, the secondary screen is still off.

In a conventional solution, in this case, a screen needs to be awakened by touching an unlocking button on the screen or enabling an automatic screen wakeup function of the electronic device, and then a prompt for an operation related to screen switching is further provided for the user, to enable the user to perform a series of manually selected operations based on the prompt, thereby completing screen switching.

In this embodiment of this application, for complex manual operations and a long interruption time in the shooting process, automatic screen switching can be implemented after a flip action by performing steps.

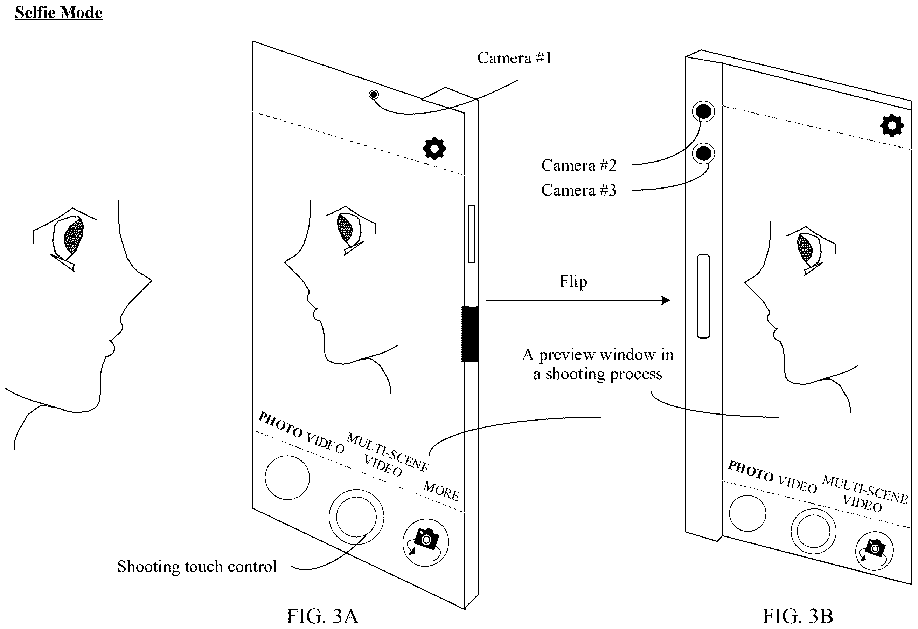

FIG. 3A to FIG. 3D are a schematic diagram of a screen switching result in a shooting process according to an embodiment of this application. In a selfie mode shown in FIG. 3A and FIG. 3B, in a process in which a user faces a primary screen and takes a photo in the selfie mode, after an electronic device is flipped, the user can directly view an interface shown in FIG. 3B without manually performing any operations. An image in a preview window in FIG. 3A comes from a camera #1, but an image in a preview window in FIG. 3B comes from a camera #2 or a camera #3. When only the camera #2 or only the camera #3 is located on a left side of a secondary screen, the image in the preview window in FIG. 3B comes from a present camera. When the camera #2 is a short-range camera and the camera #3 is a long-range camera, the image in the preview window in FIG. 3B comes from the camera #2.

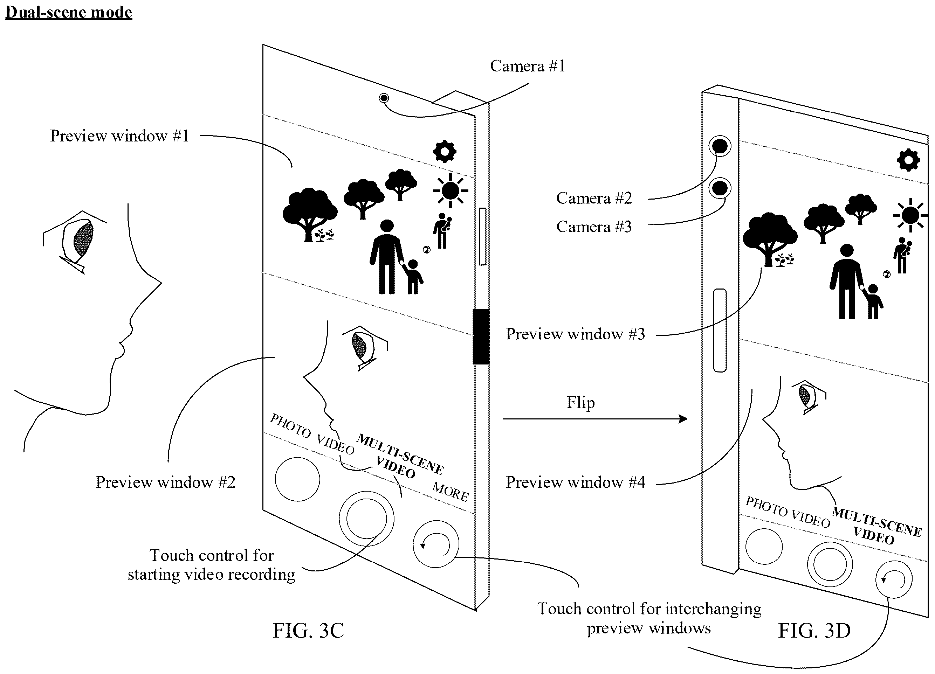

In dual-scene modes shown in FIG. 3C and FIG. 3D, in a process in which the user faces the primary screen and takes a photo in the dual-scene mode, an image in a preview window #1 comes from the camera #2, and an image in a preview window #2 comes from the camera #1. After the electronic device is flipped, the user can directly view the interface shown in FIG. 3D without manually performing any operations. An image in a preview window #3 in FIG. 3D comes from the camera #1, and an image in a preview window #4 in FIG. 3D comes from the camera #2 or the camera #3. When only the camera #2 or only the camera #3 is located on the left side of the secondary screen, the image in the preview window #4 in FIG. 3D comes from the present camera. When the camera #2 is the short-range camera and the camera #3 is the long-range camera, the image in the preview window #4 in FIG. 3D comes from the camera #2.

The dual-screen modes in FIG. 3A to FIG. 3D are merely an example of a multi-scene video recording function. The user may trigger video recording by tapping on a touch control for starting video recording. The user may further swap, by tapping a touch control for swapping preview windows, positions of the preview window #1 and the preview window #2, or may swap positions of the preview window #3 and the preview window #4.

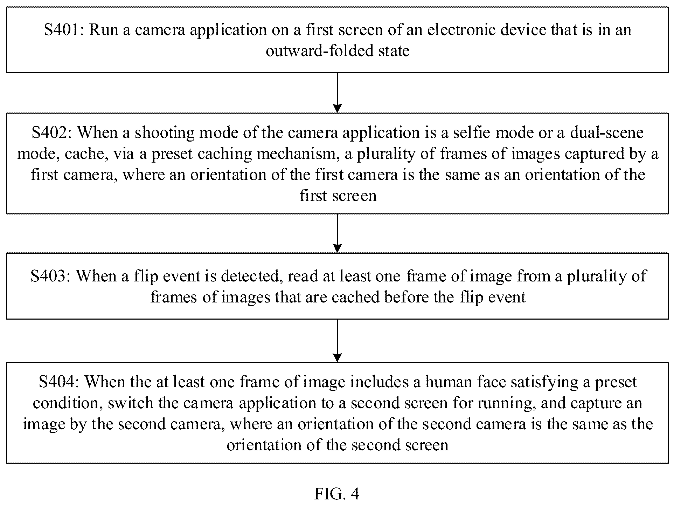

FIG. 4 is a schematic flowchart of a screen switching method in a shooting process according to an embodiment of this application. The following describes steps in FIG. 4.

S401: Run a camera application on a first screen of an electronic device that is in an outward-folded state.

The first screen may be a primary screen or a secondary screen. The first screen may be, for example, the primary screen or the secondary screen in FIG. 1, or may be the primary screen in FIG. 3A to FIG. 3D. However, it should be understood that, because FIG. 3A to FIG. 3D only show the primary screen being flipped to the secondary screen, but does not show the secondary screen being flipped to the secondary screen. In practice, the solution of this application is also applicable to the secondary screen being flipped to the primary screen.

The first screen may be considered as a screen facing a user before the flip, and the user faces the first screen when using the electronic device.

For the description of other related content such as the outward-folded state, refer to FIG. 1, and details are not described again.

In an implementation, when the first screen is the primary screen, step S401 may include: in response to a user tapping on a launch control of the camera application on the primary screen, launching and running the camera application on the primary screen.

In this implementation, because the first screen is the primary screen, the camera application is running after being launched. For example, the camera application may be launched by tapping a home screen icon of the camera application. Alternatively, a camera application that is suspended in a background may be hot launched by tapping a snapshot. In other words, the launch control may be either the home screen icon or the snapshot.

It should be understood that, for an electronic device that may directly launch a camera application on a secondary screen, when a first screen is a secondary screen, in response to the user tapping on a launch control of the camera application on the secondary screen, the camera application may also be launched and runs on the secondary screen.

However, for an electronic device that cannot launch a camera application on a secondary screen and can only launch the camera application on a primary screen, when the electronic device launches the camera application, the camera application is launched and runs on the primary screen by default. In this case, the first screen may also be the secondary screen, but running on the secondary screen occurs after a screen switching operation is triggered. The screen switching operation may be manual screen switching, or may be screen switching in the solution of embodiments of this application. The following gives descriptions by using examples.

Case 1: Before the solution of embodiments of this application is performed, if the camera application is running on the primary screen, step S401 includes: in response to the manual screen switching operation of the user, switching, to the secondary screen for running, the camera application that is running on the primary screen, where the secondary screen is the first screen.

Case 2: Before the solution of this application is performed, if the camera application is not launched, before step S401, the method includes: in response to a launch operation of the user, launching the camera application on the primary screen; and in response to the manual screen switching operation of the user, switching, to the secondary screen for running, the camera application that is running on the primary screen, where the secondary screen is the first screen.

Case 3: The solution of this application is performed in the second round, that is, step S401 and step S402 have been performed for one round, and an operation of switching from the primary screen to the secondary screen is completed, to enable the camera application to run on the secondary screen. Equivalently, steps in the solution of this application are performed first, and the operation of switching from the primary screen to the secondary screen is completed. In this process, the first screen is the primary screen, and a second screen is the secondary screen. Thereafter, the second round starts. That is, step S401 is performed again. In this case, the first screen becomes the secondary screen. After subsequent steps are performed, an operation of switching from the primary screen to the secondary screen is completed again. A difference with a first round only lies in that, during the execution of the second round, the first screen is the secondary screen, and the second screen is the primary screen.

In an implementation, when the first screen is the secondary screen and the second screen is the primary screen, the camera application is launched on the primary screen, and then switched, in response to a flip event that an orientation of the primary screen and an orientation of the secondary screen are swapped, to the secondary screen for running.

In this implementation, the first screen is a secondary screen displayed after the primary screen (referred to as the first screen) is switched to the secondary screen (referred to as the second screen) after the flip is performed once. This is, after the primary screen is switched to the secondary screen in a previous round, in a current round, the secondary screen needs to be switched back to the primary screen. In the current round, the first screen becomes the secondary screen.

S402: When a shooting mode of the camera application is a selfie mode or a dual-scene mode, cache, via a preset caching mechanism, a plurality of frames of images captured by a first camera, where an orientation of the first camera is the same as an orientation of the first screen.

When the screen is the primary screen, the first camera may be, for example, the camera #1 in the foregoing description. Other examples are no longer listed one by one.

In this embodiment of this application, a cached image is used to determine whether an image that is cached before the flip includes a human face, thereby determining whether to shoot the human face in a short-range mode, including short-range shooting in the selfie mode and short-range shooting in the dual-scene mode.

It should be understood that a specific quantity of frames of the plurality of frames of images that are cached may be set to a fixed quantity, provided that the plurality of frames of images are just enough. However, the caching is customized, and other services cannot obtain a required quantity of images when necessary. That is, the caching cannot be used in the other services. Another manner may be setting a size of cache space, and data is cached until the cache space is fully occupied. In this way, a requirement of use of other services can be considered. However, this manner also has a disadvantage that the quantity is not fixed. Therefore, subsequent reading needs to be performed selectively.

In an example, a first storage unit stores a preset quantity of images captured by the first camera, and the first storage unit may be viewed as specific storage space created for caching the image. In this example, setting of a quantity of images to be cached is further provided. When the preset quantity of images to be cached is set, it may be understood that a specific quantity of images are cached for use. Quantitative caching can minimize occupied space on the premise of satisfying needs, to facilitate subsequent reading. When quantitative caching is performed, during subsequent reading, all images can be directly read without being screened.

In an example, a preset quantity of the first storage unit is 100 frames. However, it should be understood that, the quantity may be determined based on the needs in actual use. A small quantity is not conducive to determining accuracy. A large quantity may not reflect real requirements because of an earlier image, resulting in low accuracy. Therefore, the quantity may be determined based on statistical data in history. Alternatively, duration corresponding to the quantity of frames of images to be cached is set. For example, assuming that 30 frames may be captured in 1 second, the preset quantity may be determined based on a quantity of frames corresponding to duration of 3 seconds.

In this example, it is equivalent to only 100 frames are cached. When the 100 frames need to be read after a flip event occurs, a time does not need to be considered, and all frames may be read directly.

The image may be stored in the selfie mode and the dual-scene mode only when the human face is short-range shot, and may not be stored in other modes. In addition, only the image captured by the first camera is stored, and does not occupy too much memory when a storage requirement is satisfied. It may be learned from the subsequent steps that, the stored image is used to view whether the image includes a human face satisfying a requirement. In the other modes, the human face shot nearby cannot be captured. Therefore, there is no requirement for storing a human face image. For example, an image in a preview window #1 shown in FIG. 3C is captured by a rear-facing camera, and the image does not need to be cached.

In an implementation, the preset caching mechanism may include: when a quantity of images stored in a first storage unit is less than the preset quantity of the first storage unit, after one frame of image to be cached is obtained each time, storing the frame of image in the first storage unit; or when a quantity of images stored in the first storage unit is equal to the preset quantity of the first storage unit, after one frame of image to be cached is obtained each time, replacing the frame of image with a frame of image having an earliest timestamp in the first storage unit.

Due to the caching mechanism, quantitative caching and the cached image can be updated in real time. This can facilitate subsequent reading, and reduce required storage space on the premise of satisfying the requirement.

When the caching mechanism is combined into step S402, step S402 may include: when the quantity of images stored in the first storage unit is less than the preset quantity, after a frame of image to be cached is obtained by the first camera each time, storing the frame of image captured in the first storage unit; or when the quantity of images stored in the first storage unit is equal to the preset quantity, after a frame of image to be cached is obtained by the first camera each time, replacing the frame of image captured with the frame of image having the earliest timestamp in the first storage unit.

In this implementation, images are continuously stored when fewer images are stored. After enough images are stored, the replacement may be performed from the earliest image, to ensure that a specific quantity of recent images are always in the first storage unit. This can satisfy subsequent requirements, and reduce the occupied storage space.

In an implementation, step S402 may include: in the selfie mode or the dual-scene mode, after the frame of image is captured by the first camera each time, recognizing, through a human face recognition algorithm, information about the human face in the frame of image captured, where the information about the human face includes a quantity of human faces and a size of the human face in the image; and caching the frame of image and the information about the human face in the frame of image based on the preset caching mechanism.

In this implementation, information about the human face in each frame of image is stored with the frame of image together. Subsequent determining may be performed based on the information about the human face. Caching of the image and the information about the human face does not depend on the triggering of the flip event. Therefore, the detection of the flip event and the caching of the image may be performed synchronously. After the flip event occurs, data that has been stored may be read directly, and recognition does not need to be performed again. This shortens a time of responding to the flip event.

In an example, 0 is used to indicate that no human face exists, and is cached with an image including a quantity of human faces greater than or equal to 1. When the quantity of human faces is 0, it indicates that the image does not include the human face. In another example, an image that does not include the human face is not cached.

In an example, after the information about the human face is recognized, only the image including the human face is stored during caching, such that the cached image necessarily includes the human face. In this way, a blurred image, an image that is continuously captured by the first camera when the flip event occurs, and an image captured by another camera are not cached, ensuring that the cached image is the image including the human face. Subsequently, although only one frame of image is read from the cached image, a determining result satisfying an accuracy requirement can be provided.

S403: When the flip event is detected, read at least one frame of image from a plurality of frames of images that are cached before the flip event.

The flip event is used to indicate an interaction event in which the orientation of the first screen and the orientation of the second screen are swapped by flipping the electronic device. The second screen is a screen of which orientation is opposite to an orientation of the first screen of the electronic device in the outward-folded state.

It should be understood that, when quantitative caching is performed based on the preset quantity, a quantity of at least one frame of image that is read is necessarily less than or equal to the preset quantity.

The reading is performed only after the flip event occurs. This can reduce unnecessary reading. During reading, the image that is cached before the flip event is read.

In an implementation, step S403 may include: reading, from the plurality of frames of images, one or more frames of images with a shortest time interval from the flip event, where the one or more frames of images that are read are the at least one frame of image. That is, during reading, an image that is cached at a latest time is read, or no image is cached from a moment at which the flip event occurs. Therefore, starting from the moment, a specific quantity of preceding images are read and used as the at least one frame of image that is read. An image captured at a time closer to the flip event can better reflect a screen switching requirement of the user.

It should be understood that the solution of this application can be implemented by reading only one frame of image. In order to prevent instability, for example, one or more cached frames are blurry due to screen shaking, resulting in inaccuracy of subsequent determining, the quantity is preferably a plurality of frames. An early image shot before the flip may not satisfy a user requirement. Determining performed after reading increases complexity of the processing process, and may also lead to an error in determining. However, when the image is cached, the information about the human face is recognized through the human face recognition algorithm. In this case, only the image including the human face may be stored, and the blurred image, the image captured by the another camera, or the like is not cached, that is, is not read out herein. Therefore, although only one frame of image is read, the frame of image is also sufficient for subsequent determining.

It should be further understood that, in this embodiment of this application, the first camera still captures the image since the flip event occurs until the first camera is deactivated or the shooting mode is changed. In addition, the mode satisfies one of the two. Therefore, during this period, the image captured by the first camera may be cached. In this case, if only the image that is cached before the flip event is considered, interference caused by the image can be eliminated. This improves accuracy of subsequent determining.

In an example, for the at least one frame of image that is read from the plurality of frames of images that are cached before the flip event, a timestamp of the at least one frame of image is later than a timestamp of an image other than the at least one frame of image in the plurality of frames of images that are cached before the flip event. In this example, the timestamp is used to assist in filtering an image that is expected to be read. A recent image is used to determine whether there is a human face. Therefore, a result is more accurate.

In an example, a quantity of frames of at least one frame of image that is read may further be set. For example, 100 frames and 80 frames may be set. During reading, 100 frames or 80 frames of images that are cached before the flip event occurs and that are closest to the flip event are read from the plurality of frames of images that are cached. In other words, quantitative frames of images obtained before the flip event are read.

S404: When the at least one frame of image includes the human face satisfying a preset condition, switch the camera application to the second screen for running, and capture the image by the second camera, where an orientation of the second camera is the same as the orientation of the second screen.

In other words, screen switching is triggered based on the included human face, without being performed manually.

In an implementation, step S404 may include: when it is determined that the shooting mode of the camera application used before the flip is the selfie mode or the dual-scene mode, determining whether the at least one frame of image includes the human face satisfying the preset condition, where the preset condition includes that a quantity of human faces in the at least one frame of image is greater than or equal to a preset value, and/or that a size of at least one human face in the at least one frame of image within a preset threshold range; and
when it is determined that the at least one frame of image includes the human face satisfying the preset condition, switching the camera application to the second screen for running, and capturing the image by the second camera.

In this implementation, there are two items of determining: determining of the shooting mode and determining of the human face, so that more accurate triggering of final screen switching can be ensured, to better satisfy the expectation of the user.

The preset threshold range may be set to a fixed value. For example, based on a statistical interval of the size of the human face and a length interval of an arm (because the flip cannot be performed beyond the arm, the flip action does not need to be considered, and this is not a scenario described in this application), a relative proportion interval of the size of the human face displayed on the screen may be calculated when a selfie is taken. For example, when an arm is in a straightened state, a specific quantity of sizes of the human face displayed on the screen in the selfie mode may be counted. To be specific, in this case, an average value of sizes of human faces of different persons on the screen is taken, and used as a minimum value of the preset threshold range. Under a condition of ensuring the integrity of the human face, during a selfie operation performed in a close range to the screen, a specific quantity of sizes of the human face on the screen may be counted. To be specific, in this case, an average value of sizes of human faces of different persons on the screen is taken, and used as a maximum value of the preset threshold range, to determine a preset threshold of the size of the human face. For another example, if the preset threshold range is greater than or equal to a first size, within the preset threshold range, the size of the human face is equivalent to the size of the human face being greater than or equal to the first size. Although the human face is incompletely displayed on the screen in a particularly close range, determining is not affected provided that the human face is still recognized. In addition, in order to clearly see the screen, the user does not excessively move close to the screen. Therefore, the preset threshold range may not have a maximum value.

In an implementation, step S404 may include: when it is determined that the shooting mode of the camera application used before the flip is the selfie mode and the at least one frame of image includes the human face satisfying the preset condition, switching the camera application to the second screen for running in the selfie mode, and capturing the image by the second camera.

In this implementation, in the selfie mode, a camera used for shooting is switched from the first camera to the second camera. With reference to FIG. 3A to FIG. 3C, before the flip, the camera #1 is used for a selfie operation, and after the flip, the camera #2 is used for the selfie operation.

In an implementation, step S404 may include: when it is determined that the shooting mode of the camera application used before the flip is the selfie mode or the dual-scene mode and the at least one frame of image includes the human face satisfying the preset condition, switching the camera application to the second screen for running in the selfie mode, and capturing the image by the second camera.

In this implementation, regardless of the selfie mode or the dual-scene mode, the second camera is directly used for the selfie operation.

In an implementation, step S404 may include: when it is determined that the shooting mode of the camera application used before the flip is the dual-scene mode, the first camera is used to capture the foreground image, the second camera is used to capture the background image, and at least one frame of image includes the human face satisfying the preset condition, switching the camera application to the second screen for running in the dual-scene mode; and
capturing the foreground image by the second camera, and capturing the background image by the first camera.

In this implementation, shooting objects of a foreground camera and a background camera are swapped. A camera that is used to capture a foreground scene before the flip is used to capture a background scene after the flip, and a camera that is used to capture the background scene before the flip is used to capture the foreground scene after the flip. Alternatively, a camera that is used for the selfie operation is used to capture a long-range scene, and a camera that is used to capture the long-range scene is used for the selfie operation. With reference to FIG. 3A to FIG. 3C, before the flip, the camera #1 (the first camera) is used to capture the foreground scene, and the camera #2 (the second camera) is used to capture the background scene; and after the flip, the camera #2 is used to capture the foreground scene, and the camera #1 is used to capture the background scene.

In an implementation, step S404 may include: when it is determined that the shooting mode of the camera application used before the flip is the dual-scene mode, the first camera is used to capture the foreground image, the second camera is used to capture the background image, and at least one frame of image includes the human face satisfying the preset condition, switching the camera application to the second screen for running in the dual-scene mode; and
capturing a short-range image by the second camera, and capturing a long-range image by a third camera, where an orientation of the third camera is the same as the orientation of the second screen; or
capturing a long-range image by the second camera, and capturing a short-range image by a third camera.

In this implementation, dual scenes, namely, the long-range scene and the short-range scene are considered. That is, the first camera is deactivated, and only the second camera and the third camera are used. This case is still rare because the long-range scene may be affected by the short-range image.

When the camera application running on the first screen supports only the selfie mode, step S404 may include:
determining whether the at least one frame of image includes the human face satisfying the preset condition, where the preset condition includes the quantity of human faces and/or the size of the human face; and
when it is determined that the at least one frame of image includes the human face satisfying the preset condition, switching the camera application to the second screen for running in the selfie mode, and capturing the image by the second camera.

In this implementation, when there is only the selfie mode, because all operations are selfie operations, it does not need to determine a specific mode that is used, the human face can be determined directly, and the camera application can continuously run in the selfie mode after screen switching. In practice, this case mainly occurs when the screen is flipped to the secondary screen and then flipped back to the primary screen and the secondary screen only supports the selfie mode. When the screen is flipped back to the primary screen again, the first screen becomes the secondary screen, and the second screen becomes the primary screen.

After the flip event is detected, the method further includes: when it is determined that the shooting mode of the camera application used before the flip is neither the selfie mode nor the dual-scene mode, switching the camera application to the second screen for running in the selfie mode, and capturing the image by the second camera.

If the camera application is not in the selfie mode and the dual-scene mode, the first camera cannot capture the human face. Therefore, determining whether the image includes the human face does not need to be performed, and screen switching can be directly performed by skipping the steps.

In the method shown in FIG. 4, in the shooting process, screen switching is mainly performed by caching the image obtained before the flip, and then determining, based on a photo-taking mode and the human face in the image that is cached before the flip. Screen switching may not be performed manually, which is more intelligent. Therefore, user experience is improved.

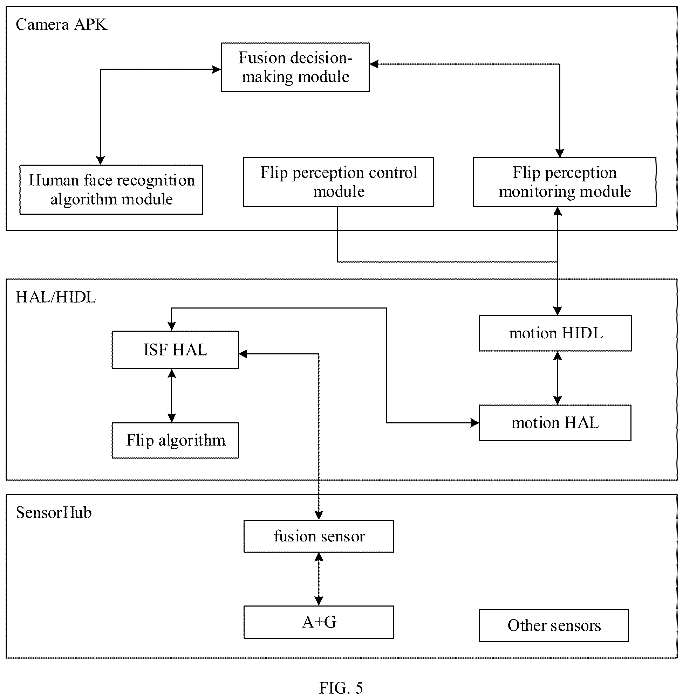

FIG. 5 is a schematic diagram of an execution procedure of screen switching in a shooting process according to an embodiment of this application. FIG. 5 may be considered as describing the solution of embodiments of this application from an internal execution process, that is, may be considered as an example in which the method shown in FIG. 4 is the internal execution process. As shown in FIG. 5, a camera software package (APK) includes a human face recognition algorithm module, a fusion decision-making module, a flip perception control module, and a flip perception monitoring module. The human face recognition algorithm module is used to invoke a human face recognition algorithm to recognize whether an image includes a human face, and may further be used to recognize a quantity of human faces and/or a size of the human face in the image. The fusion decision-making module is used to determine, based on at least one of a human face recognition result, a flip event, and a shooting mode, whether screen switching needs to be performed. The flip perception monitoring module is used to monitor whether the flip event occurs. The flip perception control module is used to control a module related to flip perception to work, detect a flip event, and report the flip event to the flip perception monitoring module.

A hardware abstraction layer (hardware abstraction layer, HAL)/a hardware abstraction layer interface definition language (HAL interface definition language, HIDL) of a camera includes a flip perception framework (ISF HAL), a flip algorithm module, a motion HAL (motion HAL), and a motion HIDL (motion HIDL), and is used to perceive the flip event, report the flip event to the perception monitoring module, and enable or disable a function under an instruction of the flip perception control module. The ISF HAL is used to invoke a flip algorithm to determine whether the flip event occurs.

SensorHub is another processor that controls a related sensor. An acceleration sensor and a gyroscope sensor (A + G) perceive a flip action, and report the flip action via a fusion sensor (fusion sensor).

It should be understood that FIG. 5 only shows some modules related to the solution of this application. In practice, in the shooting process, the some modules related to the solution of this application may be used for screen switching.

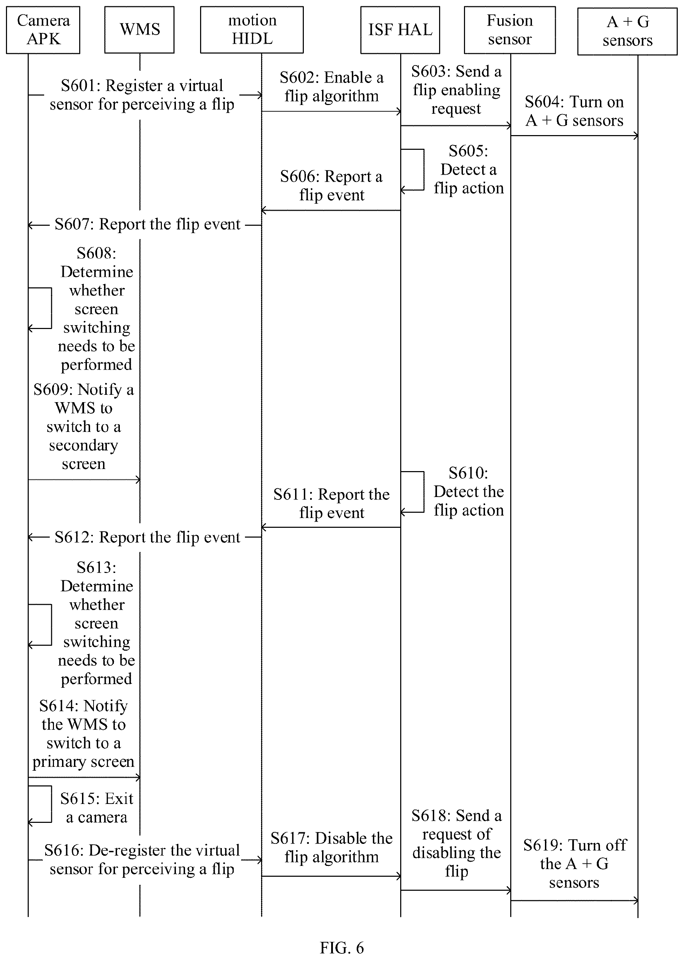

FIG. 6 is a schematic diagram of an execution procedure of screen switching in a shooting process according to an embodiment of this application. FIG. 6 may be considered as describing the execution process of the solution of embodiments of this application from a perspective of an execution process of an internal program of an electronic device, that is, may be considered as an example of the execution process of the internal program of the method shown in FIG. 4 during execution.

S601: Camera software (that is, a camera APK, or a camera APK) registers, with a motion HIDL, a virtual sensor for perceiving a flip.

S602: The motion HIDL enables a flip algorithm to an ISF HAL.

S603: The ISF HAL sends a flip enabling request to a fusion sensor (fusion sensor).

S604: The fusion sensor turns on A + G sensors.

S605: The ISF HAL detects that a flip action occurs.

S606: The ISF HAL reports a flip event to the motion HIDL.

S607: The motion HIDL reports the flip event to the camera software.

S608: The camera software determines, according to a fusion policy, whether screen switching needs to be performed.

When a camera application is running on a primary screen, the fusion policy includes determining of a flip, determining of a human face, and determining of a shooting mode.

The determining of the flip is to determine whether the flip event occurs, the determining of the human face is to determine whether a specific quantity of images that are cached before the flip includes a human face satisfying a preset condition, and the determining of the shooting mode is to determine whether the shooting mode is a selfie mode, a dual-scene mode, or not the selfie mode and the dual-scene mode.

When it is determined, according to the fusion policy, that the flip event occurs, the image includes the human face satisfying the preset condition (the quantity + a size are satisfied), and the shooting mode is the selfie mode or the dual-scene mode, step S609 may be performed.

S609: The camera software notifies a window management system (windows management system, WMS) to switch a running interface of the camera software from the primary screen to a secondary screen.

S610: The ISF HAL detects the flip action.

S611: The ISF HAL reports the flip event to the motion HIDL.

It should be understood that, the example shown in FIG. 6 is an example of an entire process of flipping from the primary screen to the secondary screen and then flipping from the secondary screen back to the primary screen. Therefore, the flip event in step S610 occurs when the camera application is running on the secondary screen, specifically when the camera application is running on the secondary screen in the selfie mode.

S612: The motion HIDL reports the flip event to the camera software.

S613: The camera software determines, according to the fusion policy, whether screen switching needs to be performed.

In this case, because the camera application is running on the secondary screen, the fusion policy includes the determining of the flip and the determining of the human face. Because the secondary screen only supports the selfie mode in the example shown in FIG. 6, the determining of the shooting mode does not need to be performed.

The determining of the flip is to determine whether the flip event occurs, and the determining of the human face is to determine whether the specific quantity of images that are cached before the flip includes the human face satisfying the preset condition.

When it is determined, according to the fusion policy, that the flip event occurs and the image includes the human face satisfying the preset condition (the quantity + the size are satisfied), step S613 may be performed.

S614: The WMS of the camera software switches the running interface of the camera software from the secondary screen to the primary screen.

S615: The camera software detects a request of exiting a camera.

S616: The camera software de-registers, with the motion HIDL, the virtual sensor for perceiving a flip.

S617: The motion HIDL notifies the ISF HAL to disable the flip algorithm.

S618: The ISF HAL sends, to the fusion sensor, a request of disabling the flip.

S619: The fusion sensor turns off the A + G sensors.

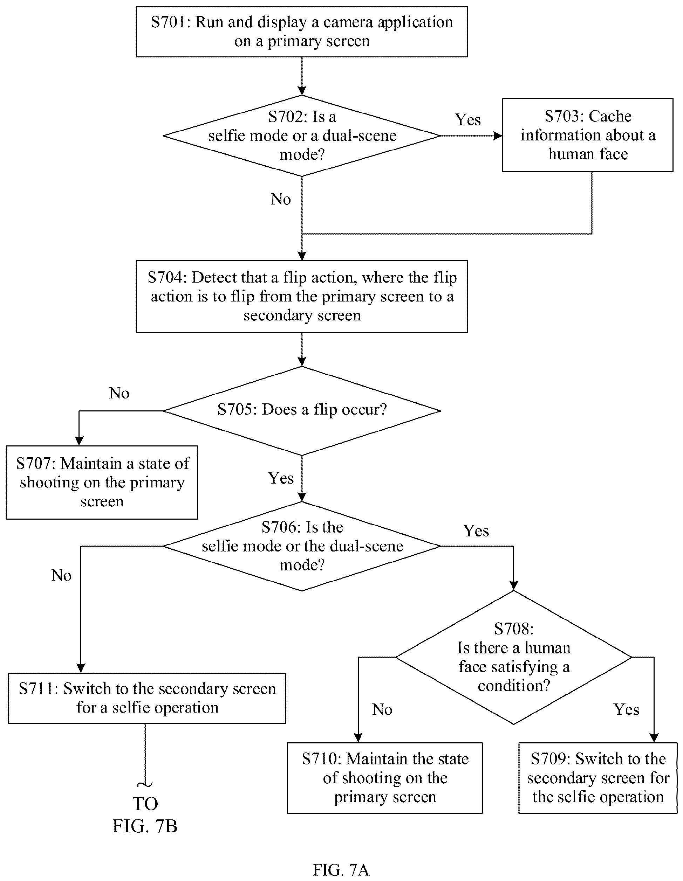

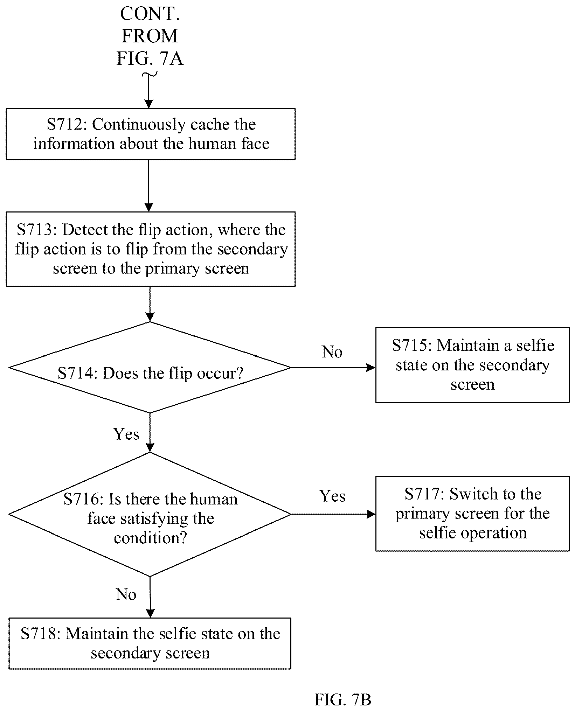

FIG. 7A and FIG. 7B are a schematic flowchart of a screen switching method in a shooting process according to an embodiment of this application. The following describes steps in FIG. 7A and FIG. 7B. FIG. 7A and

FIG. 7B may be considered as an example of the method shown in FIG. 4, and this example includes the process of flipping from a primary screen to a secondary screen and flipping back to the primary screen.

S701: Run a camera application on a primary screen of an electronic device in an outward-folded state, and display a camera interface.

In this case, the primary screen is the first screen in step S401. That is, S701 is an example of step S401.

S702: Determine whether a current shooting mode is a selfie mode or a dual-scene mode, and when a determining result is yes, perform step S703, or when a determining result is no, perform step S704.

S703: Cache information about a human face.

Herein, information about a human face in an image captured by a camera (hereinafter referred to as a front-facing camera) on the primary screen is cached. The information about the human face may be obtained through a human face recognition algorithm.

S704: Detect that a flip action occurs, where the flip action is to flip from the primary screen to a secondary screen.

This step may be performed by a fusion sensor. Herein, necessarily, the flip action is to successfully flip from the primary screen facing the human face to the secondary screen facing the human face. Because the camera application is displayed on the primary screen, the occurring flip in this case is only to flip from the primary screen to the secondary screen. A failed flip is not considered.

S705: Invoke a flip algorithm to detect whether a flip event occurs, and when the determining result is yes, perform step S706, or when the determining result is no, perform step S707.

This step may be performed by an ISF HAL through the flip algorithm.

S706: Determine whether the selfie mode or the dual-scene mode is used before the flip, and when the determining result is yes, perform step S708, or when the determining result is no, perform step S711.

Because the determining is performed after the flip, it is equivalent to performing the detection one more time. Therefore, final screen switching is performed more accurately, avoiding unnecessary screen switching.

S707: Maintain a state of shooting on the primary screen, and skip performing screen switching.

That is, the shooting is maintained on the primary screen, and the shooting mode is an original mode.

S708: Determine whether there is a human face satisfying a condition, and when the determining result is yes, perform step S709, or when the determining result is no, perform step S710.

For example, it may determine whether a size of the human face is within a preset threshold range and the human face is a human face in the first 100 frames obtained before the flip. When the determining result is yes, step S709 is performed, or when the determining result is no, step S710 is performed.

In this determining, it is equivalent to determining whether at least one frame of image is an image obtained at a close moment, and whether the image includes a human face of which size is within the preset threshold range.

Herein, the first 100 frames obtained before the flip are used as an example. It is equivalent to an example of determining whether the human face satisfying the condition exists.

S709: Switch to the secondary screen for a selfie operation.

That is, for the selfie mode or the dual-scene mode, if the human face satisfying the condition exists, it can indicate that a user has a high demand for continuously taking a photo of the user after the flip. Herein, an example in which the secondary screen only supports the selfie mode is used for description. In this case, after screen switching, the camera application necessarily runs on the secondary screen in selfie mode.

S710: Maintain the state of shooting on the primary screen, and skip performing screen switching.

That is, the shooting is maintained on the primary screen, and the shooting mode is an original mode.

S711: Switch to the secondary screen for the selfie operation.

That is, for neither the selfie nor the dual-scene mode, it indicates that a rear-facing camera is used to shoot, and after the flip, the rear-facing camera is continuously used to shoot. Herein, an example in which the secondary screen only supports the selfie mode is used for description. In this case, after screen switching, the camera application necessarily runs on the secondary screen in the selfie mode.

It should be noted that, when screen switching is completed and the camera application runs on the secondary screen in the selfie mode, one round of screen switching is completed, and subsequent steps are an execution process of flipping again.

When the camera application is running on the secondary screen, equivalently, the first screen in step S401 becomes the secondary screen.

S712: Continuously cache the information about the human face.

This may be considered as an example in which the first screen is the secondary screen and a first camera is the rear-facing camera (a camera of which orientation is the same as an orientation of the secondary screen) in step S402.

Because the secondary screen only supports the selfie mode, a condition for caching the information about the human face is satisfied necessarily. Therefore, determining of the mode does not need to be performed. Alternatively, although the determining of the mode is performed, a determining result is necessarily "yes" only. Therefore, step S712 is necessarily performed after step S711.

S713: Detect the flip action, where the flip action is to flip from the secondary screen to the primary screen.

This step may be performed by the fusion sensor. Herein, necessarily, the flip action is to successfully flip from the secondary screen facing the human face to the primary screen facing the human face. After step S712 is performed, the camera application is displayed on the secondary screen. The occurring flip in this case is only to flip from the secondary screen to the primary screen. The failed flip is not considered.

S714: Detect, through the flip algorithm, whether the flip event occurs, and when the determining result is no, perform step S715, or when the determining result is yes, perform step S716.

This step may be performed by the ISF HAL through the flip algorithm.

S715: Maintain a state of shooting on the secondary screen in the selfie mode, and skip performing screen switching.

That is, the shooting is maintained on the secondary screen, and the shooting mode is the selfie mode.

S716: Determine whether the human face satisfying the condition exists, and when the determining result is yes, perform step S717, or when the determining result is no, perform step S718.

For example, it may determine whether the size of the human face is within the preset threshold range and the human face is the human face within the first 100 frames obtained before the flip. When the determining result is yes, step S717 is performed, or when the determining result is no, step S718 is performed.

In this determining, it is equivalent to determining whether the at least one frame of image is the image obtained at the close moment, and whether the image includes the human face of which size is within the preset threshold range.

Herein, the first 100 frames obtained before the flip are used as an example. It is equivalent to an example of determining whether the human face satisfying the condition exists.

S717: Switch to the primary screen for the selfie operation,
that is, switch to the primary screen, and continuously run the camera application on the primary screen in the selfie mode.

S718: Maintain the state of shooting on the secondary screen in the selfie, and skip performing screen switching.

That is, the shooting is maintained on the secondary screen, and the shooting mode is the selfie mode.

In the method shown in FIG. 7A and FIG. 7B, after the user opens the camera application on the primary screen, a flip perception control module in a camera APK enables a flip perception algorithm, and a flip perception monitoring module monitors the flip event. When the user selects a front selfie mode or the dual-scene mode on a primary screen interface, and the dual-scene mode includes taking a selfie using the front-facing camera, the information about the human face is continuously cached through the human face algorithm. When the user flips from the primary screen to the secondary screen, the flip event is detected through the flip perception algorithm, and reported to the camera APK via the flip perception monitoring module in the camera. A fusion decision-making module in the camera APK makes a decision based on whether a camera on the primary screen is in a front selfie state/a dual-scene state before the flip, if the camera on the primary screen is in the front selfie state/dual-scene state, determines, after detecting the flip event, whether the cached information about the human face satisfies a threshold condition for the quantity of human faces and an area of the human face (the size of the human face), or if the camera on the primary screen is not in the front selfie state/dual-scene state, directly controls, based on the flip event, switching from the primary screen to the secondary screen. After switching to the secondary screen, in a selfie interface of the secondary screen, the size of the human face is calculated through the human face algorithm, and information about the human face satisfying a threshold definition is continuously refreshed and cached into a preset cache of the information about the human face, for example, a pre-defined cache of information about the 100 frames of human faces. When the user flips from the selfie mode on the secondary screen back to the primary screen, the flip perception monitoring module first monitors the flip event, and determines whether the cache of the information about the human face includes the information about the human face. The fusion decision-making module makes a final decision based on the flip + the human face, and if the decision is passed, the user flips from a super selfie mode on the secondary screen to the primary screen for shooting.

It may be learned from the method shown in FIG. 7A and FIG. 7B that, when a function of the secondary screen is different from a function of the primary screen, an adjustment may be made based on a fusion decision. Therefore, when the secondary screen only supports the selfie mode, the determining of the shooting mode does not need to be performed after the flip. In addition, because the secondary screen only supports the selfie mode, after the screen is flipped from the primary screen to the secondary screen, a camera that is used to capture the image is only changed into the rear-facing camera from the front-facing camera, and the front-facing camera does not need to continuously capture the image.

It should be further noted that, this application is aimed at a problem that screen switching cannot be performed automatically after the flip action occurs in the shooting process, but a flip performed after screen switching is not within the scope of this application. The flip performed after screen switching is only to flip a screen with an interface to the user, and responding does not need to be performed.

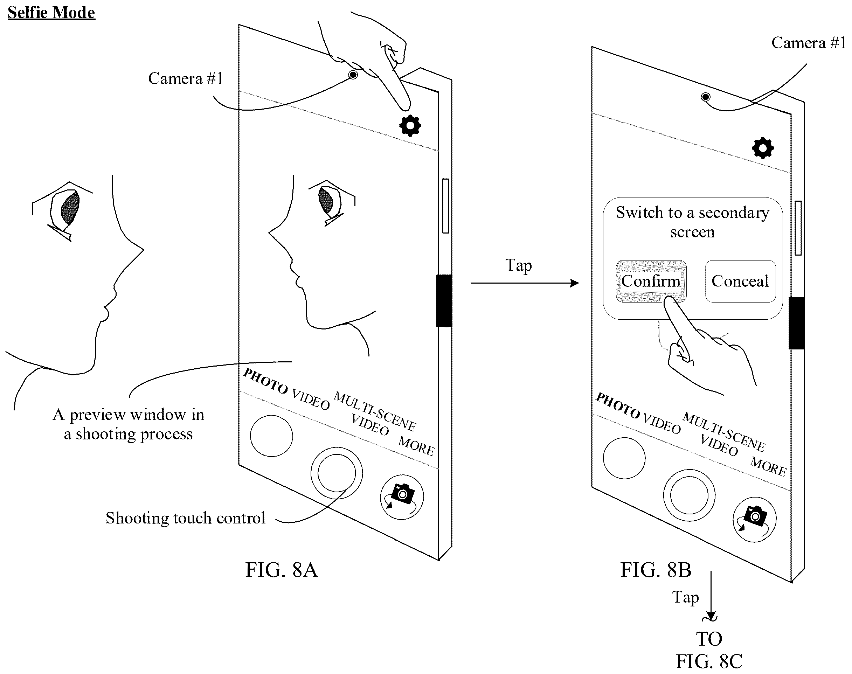

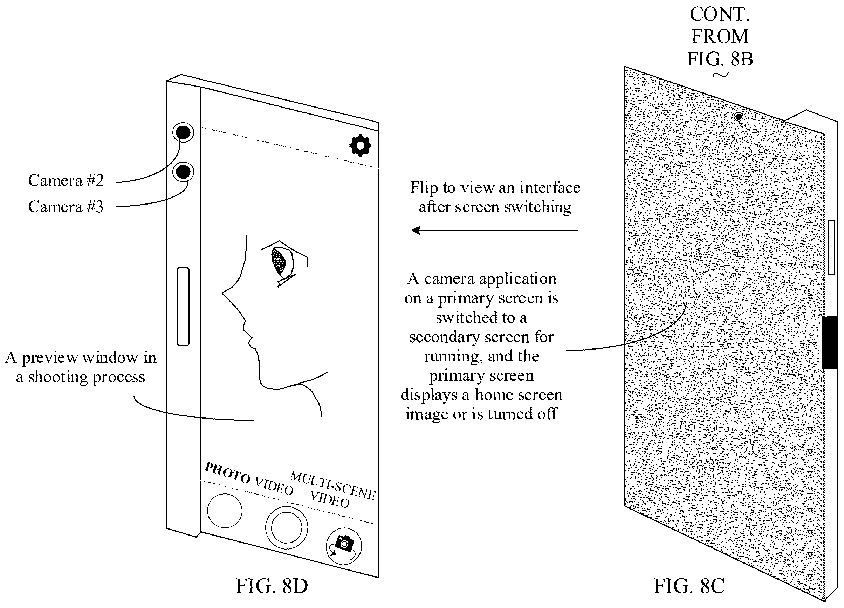

FIG. 8A to FIG. 8D are a schematic diagram of a process in which an electronic device is flipped after screen switching during a selfie. As shown in FIG. 8A, a user is taking a photo using a front-facing camera: a camera #1 in a selfie mode. In this case, if the user expects to switch to a secondary screen, the user taps on a settings control, and a prompt window shown in FIG. 8B pops up. Then, the user taps on a confirmation control shown in FIG. 8B. After screen switching is performed, the user is presented with a current primary screen becoming a home screen background or being off directly, as shown in FIG. 8C. In FIG. 8C, a camera on the primary screen is switched to the secondary screen. As a result, the primary screen is turned off. In this case, if the user expects to view a shooting interface, the user needs to flip to the secondary screen. However, it should be understood that, in this case, because a camera interface is displayed on the secondary screen, after the flip, screen switching performed after the flip does not need to be considered. In addition, after screen switching is performed manually, the user determines duration before the flip, and the user may not perform screen switching. For example, if two users sit face in face, screen switching is intended to take a photo of the user on the secondary screen by a friend. It is assumed that the user may view the screen shown in FIG. 8D after the flip. However, it should be understood that, the flip is equivalent to turning a page of a book for viewing content of a next page of the book. Therefore, this flip action does not need to be reported as a flip event and responded by an electronic device. The flip may be more appropriately referred to as turn-over. The manual screen switching and turn-over are independent of each other. The first is manual screen switching, and the second is turn-over.

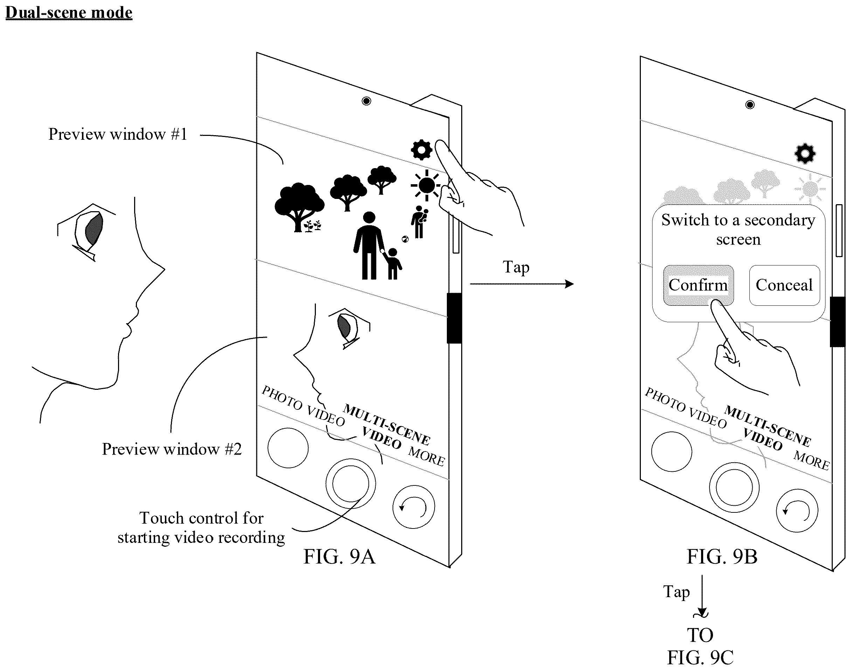

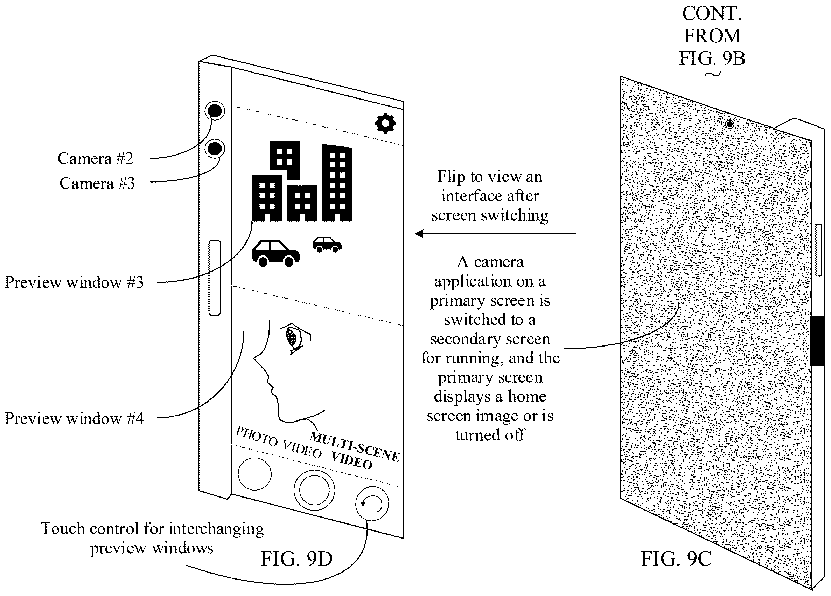

FIG. 9A to FIG. 9D are a schematic diagram of a process in which an electronic device is flipped after screen switching in a dual-scene shooting process. As shown in FIG. 9A, a user is taking a photo using a front-facing camera: a camera #1 in a dual-scene mode, while shooting a long-range scene using a rear-facing camera. In this case, if the user expects to switch to a secondary screen, the user taps on a settings control, a prompt window as shown in FIG. 9B pops up. Then, the user taps on a confirmation control shown in FIG. 9B. After screen switching is performed, the user is presented with a current primary screen becoming a home screen background or a screen is directly off, as shown in FIG. 9C. In FIG. 9C, a camera on the primary screen is switched to a secondary screen, resulting in the primary screen being off. In this case, if the user expects to view a shooting interface, the user needs to flip to the secondary screen However, it should be understood that, in this case, because a camera interface is displayed on the secondary screen, after the flip, screen switching performed after the flip does not need to be considered. In addition, after screen switching is performed manually, the user determines duration before the flip, and the user may not perform screen switching. For example, if two users sit face in face, screen switching is intended to take a photo of the user on the secondary screen by a friend. It is assumed that the user may view the screen shown in FIG. 9D after the flip. However, it should be understood that, the flip is equivalent to turning a page of a book for viewing content of a next page of the book. Therefore, this flip action does not need to be reported as a flip event and responded by an electronic device. The flip may be more appropriately referred to as turn-over. The manual screen switching and turn-over are independent of each other. The first is manual screen switching, and the second is turn-over. For example, the long-range image shown in FIG. 9D is no longer the image shown in FIG. 9A, and the two images are far different. It may be that after the user performs screen switching manually to obtain the interface shown in FIG. 9C, the user flips the electronic device after a long interval. During the interval, the user has carried the electronic device and moved to another place. Therefore, after the flip, although a short-range scene is shot by the user, the long-range image is a new image. On the premise of manual screen switching, manual screen switching and manual turn-over of the electronic device are independent of each other, which do not need to be coherent or related, and the duration between manual screen switching and manual turn-over is completely determined based on the subjective will of the user.

It may be learned from FIG. 8A to FIG. 8D and FIG. 9A to FIG. 9D that, the solution of this application is still better. Because the user does not need to perform screen switching manually in the solution of this application, and does not see a black screen (screen-off) in a time period after the user performs screen switching manually. Therefore, use experience is better.

The foregoing mainly describes the methods in embodiments of this application with reference to the accompanying drawings. It should be understood that although the various steps in the flowcharts related to the embodiments described above are shown sequentially, the steps are not necessarily performed sequentially in the order shown in the figures. Unless clearly specified in this specification, there is no strict sequence limitation on the execution of the steps, and the steps may be performed in another sequence. Moreover, at least some of the steps in the flowcharts of the foregoing embodiments may include a plurality of steps or a plurality of stages. These steps or stages are not necessarily performed at the same moment but may be performed at different moments. These steps or stages are not necessarily sequentially performed, but may be performed in turn or alternately with other steps or at least some of steps or stages of other steps. The following describes an apparatus in an embodiment of this application with reference to an accompanying drawing.

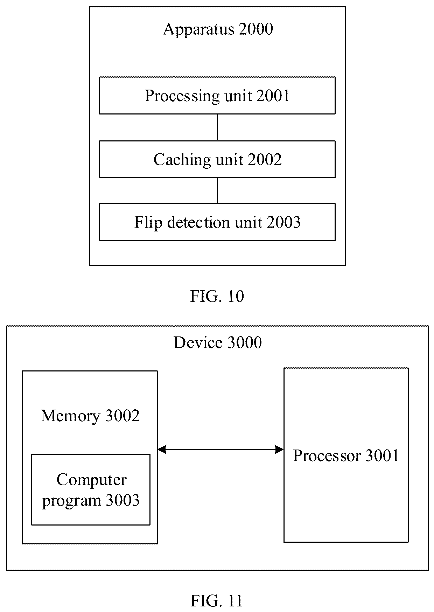

FIG. 10 is a schematic diagram of an apparatus for performing transition motion effect of screen switching in a shooting process according to an embodiment of this application. As shown in FIG. 10, an apparatus 2000 includes a processing unit 2001, a caching unit 2002, and a flip detection unit 2003. The apparatus 2000 may be integrated into electronic devices such as a mobile phone, a tablet computer, and a touchscreen notebook computer.

The apparatus 2000 can be configured to perform any screen switching method in a shooting process. For example, the processing unit 2001 may be configured to perform step S401 and step S404, the caching unit 2002 may be configured to perform S402, and the flip detection unit 2003 may be configured to perform S403. The apparatus 2000 may further be configured to perform the processes shown in FIG. 3A to FIG. 3C and FIG. 5, and may be used to perform the steps shown in FIG. 6 and FIG. 7A and FIG. 7B.

In an implementation, the apparatus 2000 may further include a storage unit for storing relevant data. The storage unit may be integrated into any one of the foregoing units, or may be a unit independent of all the foregoing units.

FIG. 11 is a schematic diagram of a hardware structure of an electronic device according to an embodiment of this application. As shown in FIG. 11, the electronic device 3000 includes: at least one processor 3001 (only one processor is shown in FIG. 11), a memory 3002, and a computer program 3003 that is stored in the memory 3002 and that can be run on the at least one processor 3001. When executing the computer program 3003, the processor 3001 implements the steps in any of the foregoing methods.

A person skilled in the art may understand that FIG. 11 is merely an example of the electronic device, and constitutes no limitation on the electronic device. In practice, the electronic device may include more or fewer components than those shown in the figure, or may have a combination of some components, or may have a different component arrangement, for example, may further include an input/output device, a network access device, and the like.

The processor 3001 may be a central processing unit (central processing unit, CPU) or another general-purpose processor, a digital signal processor (digital signal processor, DSP), an application-specific integrated circuit (application-specific integrated circuit, ASIC), a field-programmable gate array (field-programmable gate array, FPGA) or another programmable logic device, a discrete gate or transistor logic device, a discrete hardware component, or the like. The general-purpose processor may be a microprocessor, or the processor may be any conventional processor or the like.

In some embodiments, the memory 3002 may be an internal storage unit of the electronic device 3000, for example, a hard disk drive or an internal memory of the electronic device 3000. In some other embodiments, the memory 3002 may be alternatively an external storage device of the electronic device 3000, for example, a plug-in hard disk drive, a smart media card (smart media card, SMC), a secure digital (secure digital, SD) card, or a flash card (flash card) that is provided on the electronic device 3000. Optionally, the memory 3002 may include both an internal storage unit and an external storage device of the electronic device 3000. The memory 3002 is configured to store an operating system, an application, a bootloader, data, another program, and the like, for example, program code of the computer program. The memory 3002 may be further configured to temporarily store data that has been output or that is to be output.

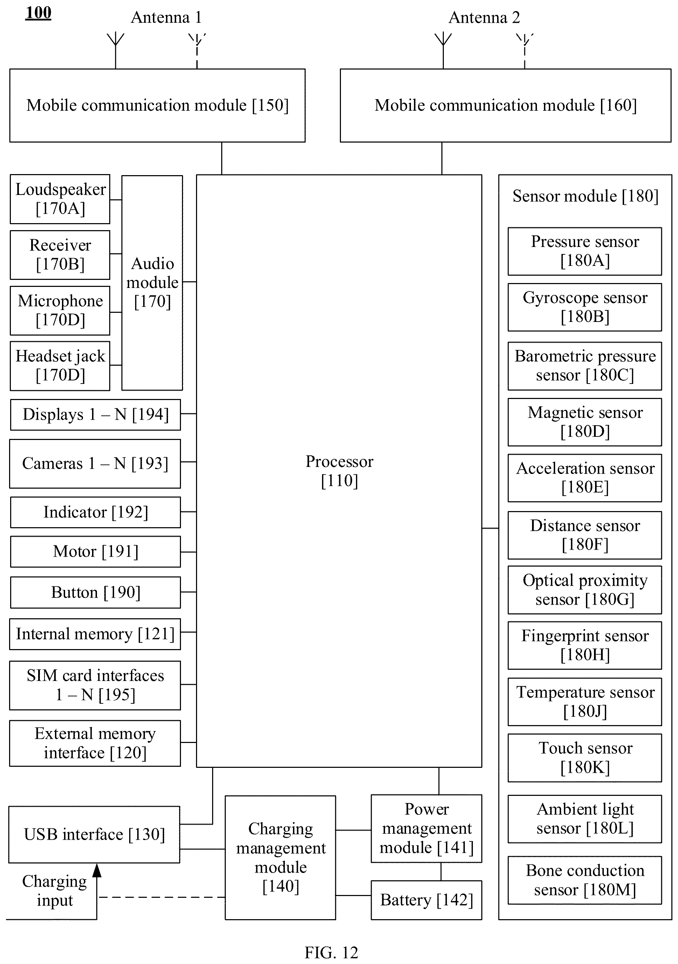

FIG. 12 is a schematic diagram of another hardware structure of an electronic device according to an embodiment of this application. As shown in FIG. 12, the electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, and an audio module 170, a loudspeaker 170A, a receiver 170B, a microphone 170C, a headset jack 170D, a sensor module 180, a button 190, a motor 191, an indicator 192, a camera 193, a display 194, a subscriber identity module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, and a touch sensor 180K, an ambient light sensor 180L, a bone conduction sensor 180M, and the like.

It can be understood that the structure illustrated in this embodiment of this application constitutes no specific limitation on the electronic device 100. In some other embodiments of this application, the electronic device 100 may include more or fewer components than those shown in the figure, some components may be combined, some components may be split, or different component arrangements may be used. The components shown in the figure may be implemented in hardware, software, or a combination of software and hardware.

For example, the processor 110 shown in FIG. 12 may include one or more processing units. For example, the processor 110 may include an application processor (application processor, AP), a graphics processing unit (graphics processing unit, GPU), an image signal processor (image signal processor, ISP), a controller, a memory, and/or a neural-network processing unit (neural-network processing unit, NPU), and the like. Different processing units may be independent devices, or may be integrated into one or more processors.

In this embodiment of this application, a camera APK and a HAL/HIDL layer are located in the AP, and sensorHub is a processor configured to manage related sensors.

In some embodiments, the MIPI may be configured to connect the processor 110 to peripheral components such as the display 194 and the camera 193. The MIPI interface includes a camera serial interface (camera serial interface, CSI), a display serial interface (display serial interface, DSI), and the like. The processor 110 communicates with the camera 193 through the CSI interface, to implement a shooting function of the electronic device 100. The processor 110 communicates with the display 194 through the DSI interface, to implement a display function of the electronic device 100.

In some embodiments, the GPIO interface may be configured by using software. The GPIO interface may be configured as a control signal or as a data signal. The GPIO interface may be configured to connect the processor 110 to the camera 193, the display 194, the wireless communication module 160, the audio module 170, the sensor module 180, or the like. The GPIO interface may also be configured as an I2C interface, an I2S interface, an UART interface, an MIPI interface, or the like.

It may be understood that a schematic interface connection relationship between the modules in embodiments of this application is merely an example for description, and constitutes no limitation on the structure of the electronic device 100. In some other embodiments of this application, the electronic device 100 may alternatively use an interface connection manner different from that in the foregoing embodiment, or use a combination of a plurality of interface connection manners.

The electronic device 100 may implement a display function through the GPU, the display 194, the application processor, and the like. The GPU is a microprocessor for image processing and is connected to the display 194 and the application processor. The GPU is configured to perform mathematical and geometric calculations and graphics rendering. The processor 110 may include one or more GPUs, and the GPU executes program instructions to generate or change display information.

The display 194 is configured to display an image, a video, and the like.

The electronic device 100 may implement a shooting function by using the ISP, the camera 193, the video encoder and decoder, the GPU, the display 194, the application processor, and the like.

The ISP is used to process data fed back by the camera 193. For example, during photographing, a shutter is opened, and light is transmitted to a photosensitive element of the camera through a lens. An optical signal is converted into an electrical signal. The photosensitive element of the camera transmits the electrical signal to the ISP for processing, to convert the electrical signal into an image visible to naked eyes. The ISP may also optimize algorithms for noise point, brightness, and skin tone of the image. The ISP may further optimize parameters such as exposure and a color temperature of a photographing scene. In some embodiments, the ISP may be provided in the camera 193.

The camera 193 is configured to capture a still image or a video. An optical image of an object is generated through the lens, and is projected onto the photosensitive element. The photosensitive element converts an optical signal into an electrical signal, and then transfers the electrical signal to the ISP to convert the electrical signal into a digital image signal. The ISP outputs the digital image signal to the digital signal processor for processing. The digital signal processor converts the digital image signal into an image signal in standard RGB and YUV formats. In some embodiments, the electronic device 100 may include 1 or N camera 193, where N is a positive integer greater than 1.

The NPU is a neural-network (neural-network, NN) computing processor that processes input information rapidly by referring to a structure of a biological neural network, for example, by referring to a transmission mode between human brain neurons, and can further perform self-learning continuously. Applications such as intelligent cognition of the electronic device 100, for example, image recognition, facial recognition, voice recognition, and text understanding, may be implemented by using the NPU.

The pressure sensor 180A is configured to sense a pressure signal, and may convert the pressure signal to an electrical signal. In some embodiments, the pressure sensor 180A may be arranged at the display 194. The pressure sensor 180A may be of any type. For example, it is a resistive pressure sensor, an inductive pressure sensor, or a capacitive pressure sensor. The capacitive pressure sensor may include at least two parallel plates made of conductive materials. When force is applied onto the pressure sensor 180A, capacitance between electrodes changes. The electronic device 100 determines intensity of the pressure based on the change in the capacitance. When a touch operation is performed on the display 194, the electronic device 100 detects intensity of the touch operation based on the pressure sensor 180A. The electronic device 100 may also calculate a touch position based on a detection signal of the pressure sensor 180A. In some embodiments, touch operations that are performed at a same touch position but have different touch operation intensity may correspond to different operation instructions. For example, when a touch operation whose touch operation intensity is less than a first pressure threshold is performed on an SMS message application icon, an instruction for viewing an SMS message is executed. When a touch operation with a touch operation strength greater than or equal to the first pressure threshold is performed on the short message application icon, an instruction of creating a new short message is executed.

The gyroscope sensor 180B may be configured to determine a motion posture of the electronic device 100. In some embodiments, angular velocities of the electronic device 100 around three axes (that is, x, y, and z axes) may be determined by using the gyroscope sensor 180B. The gyroscope sensor 180B may be used for image stabilization during shooting. For example, when the shutter is pressed, the gyroscope sensor 180B detects an angle at which the electronic device 100 jitters, and calculates, based on the angle, a distance for which a lens module needs to compensate, so that a lens offsets the jitter of the electronic device 100 through a reverse motion, thereby implementing image stabilization. The gyroscope sensor 180B may be further used in scenarios of navigation and a motion sensing game.

The acceleration sensor 180E may detect magnitudes of accelerations of the electronic device 100 in various directions (usually on three axes), and may detect a magnitude and a direction of gravity when the electronic device 100 is still. The acceleration sensor 180E may be further configured to identify a posture of the electronic device, and is used in an application such as switching between a landscape mode and a portrait mode or a pedometer.

The touch sensor 180K is also referred to as a "touch panel". The touch sensor 180K may be disposed on the display 194. The touch sensor 180K and the display 194 form a touchscreen, also referred to as a "touch control screen". The touch sensor 180K is configured to detect a touch operation performed on or near the touch sensor 180K. The touch sensor may transfer the detected touch operation to the application processor to determine a type of the touch event. A visual output related to the touch operation may be provided through the display 194. In some other embodiments, the touch sensor 180K may alternatively be disposed on a surface of the electronic device 100, and is located at a position different from that of the display 194.

It should be noted that content such as information exchange or an execution process between the apparatuses/units is based on a same concept as that in the method embodiments of this application. Therefore, for specific functions and technical effects brought by the apparatuses/units, refer to the method embodiment parts. Details are not described herein again.

Those skilled in the art can clearly understand that for convenience and brevity of description, only the division of the function units and modules described above is exemplified. In practical applications, the foregoing functions may be allocated to and completed by different function units and modules according to requirements. That is, the internal structure of the apparatus is divided into different function units or modules to complete all or some of the functions described above. The functional units/modules in the embodiments may be integrated into one processing unit, or each of the units may exist alone physically, or two or more units are integrated into one unit. The above integrated unit may be implemented either in a form of hardware or in a form of a software functional unit. In addition, specific names of the functional units/modules are only for the convenience of distinguishing each other, and are not intended to limit the protection scope of this application. For specific working processes of the units/ modules in the above system, reference may be made to the corresponding processes in the above method embodiment, and details are not described herein again.

An embodiment of this application further provides an electronic device. The electronic device includes at least one processor, a memory, and a computer program that is stored in the memory and that can run on the at least one processor. The electronic device is enabled to implement steps in any one of the foregoing methods may be implemented when the processor executes the computer program.

An embodiment of this application further provides a computer-readable storage medium. The computer-readable storage medium stores a computer program. The computer program may implement steps of any one of the above method embodiments when executed by an electronic device.

An embodiment of this application provides a computer program product. The computer program product includes a computer program. The computer program may implement steps of the above method embodiments when executed by an electronic device.

When the integrated unit is implemented in a form of a software functional unit and sold or used as an independent product, the integrated unit may be stored in a computer-readable storage medium. Based on this understanding, in this application, all or some of the procedures in the methods in the embodiments may be implemented by using a computer program instructing relevant hardware. The computer program may be stored in a computer-readable storage medium. When the computer program is executed by a processor, the steps in the foregoing method embodiments can be performed. The computer program includes a computer program code. The computer program code may be in a source code form, an object code form, an executable file, some intermediate forms, or the like. The computer-readable medium may include at least any entity or apparatus that can carry computer program code to a photographing apparatus/electronic device, a recording medium, a computer memory, a read-only memory (read-only memory, ROM), a random access memory (random access memory, RAM), an electrical carrier signal, a telecommunication signal, and a software distribution medium, for example, a USB flash disk, a removable hard disk, a magnetic disk, or an optical disc. In some jurisdictions, the computer-readable medium cannot be the electrical carrier signal or the telecommunication signal according to legislation and patent practices.

In the foregoing embodiments, the descriptions of the embodiments have respective focuses. For a part that is not detailed or described in an embodiment, reference may be made to related descriptions in other embodiments.

Persons of ordinary skill in the art may be aware that the units and the algorithm steps in the examples described with reference to the embodiments disclosed in this specification can be implemented by using electronic hardware or a combination of computer software and electronic hardware. Whether the functions are performed by hardware or software depends on particular applications and design constraint conditions of the technical solutions. A person skilled in the art may use different methods to implement the described functions for each specific application, but such implementation should not be considered to be beyond the scope of this application.

In the embodiments provided in this application, it should be understood that the disclosed apparatus/ device and method may be implemented in other manners. For example, the described apparatus/device embodiment is merely an example. For example, division into the modules or units is merely logical function division and may be another division in actual implementation. For example, a plurality of units or components may be combined or integrated into another system, or some features may be ignored or not performed. In addition, the intercoupling or direct coupling or communication connection shown or discussed may be indirect coupling or communication connection through some interfaces, apparatuses, or units; or may be implemented in electrical, mechanical, or other forms.

The units described as separate parts may or may not be physically separate. Parts shown as units may or may not be physical units, which may be located in one position, or may be distributed on a plurality of network units. Some or all of the units may be selected according to actual requirements to achieve the objectives of the solutions in the embodiments.

It should be understood that when used in the specification and the appended claims of this application, the terms "comprise" or "include" indicate existence of described features, integers, steps, operations, elements, and/or components, but do not exclude existence or addition of one or more other features, integers, steps, operations, elements, components, and/or their sets.

It should also be understood that the term "and/or" used in the specification and the appended claims of this application refers to any combination and all possible combinations of one or more associated listed items, and includes these combinations.

In addition, in descriptions of the specification of this application and the appended claims, the terms such as "first", "second", and "third" are merely used for distinguishing descriptions, and cannot be understood as an indication or implication of relative importance.

Reference to "an embodiment", "some embodiments", or the like described in the specification of this application indicates that one or more embodiments of this application include a specific feature, structure, or characteristic described with reference to the embodiments. Therefore, statements such as "in one embodiment", "in some embodiments", "in some other embodiments" that appear in different parts of this specification do not necessarily refer to same embodiments, but mean "one or more but not all embodiments", unless otherwise specifically emphasized in other manners. The terms "include", "comprise", and "have", and variants thereof all mean "include but are not limited to", unless otherwise specifically emphasized in another manner.

The foregoing embodiments are merely intended for describing the technical solutions but not for limiting this application. Although this application is described in detail with reference to the foregoing embodiments, a person of ordinary skill in the art should understand that, modifications may still be made to the technical solutions described in the foregoing embodiments, or equivalent replacements may be made to some technical features in the technical solutions, as long as such modifications or replacements do not cause the essence of corresponding technical solutions to depart from the spirit and scope of the technical solutions of embodiments of this application, which shall fall within protection scope of this application.

## Claims

1. A screen switching method in a shooting process, applied to an electronic device, wherein the electronic device comprises a display, the display comprises a first screen and a second screen, the first screen and the second screen are two display regions of the display, a display orientation of the first screen is opposite to a display orientation of the second screen when the electronic device is in a folded state, a display orientation of the first screen is the same as a display orientation of the second screen when the electronic device is in an unfolded state, and the method comprises:
displaying, at a first moment, a first preview interface of a camera application on the first screen when the electronic device is in the folded state, wherein the first preview interface comprises an image captured by a first camera, and the first preview interface comprises a human face image;
displaying, at a second moment in response to the electronic device being flipped, a second preview interface of the camera application on the second screen when the first preview interface is displayed on the first screen, wherein the second preview interface comprises an image captured by a second camera, and the second moment is later than the first moment;
displaying, at a third moment, a third preview interface of the camera application on the first screen when the electronic device is in the folded state, wherein the third preview interface comprises the image captured by the first camera, the third preview interface does not comprise the human face image, and the third moment is later than the second moment; and
displaying, at a fourth moment in response to the electronic device being flipped, a fourth preview interface of the camera application on the first screen when the first screen displays the third preview interface, wherein the fourth preview interface comprises the image captured by the first camera, and the fourth moment is later than the third moment.

2. The method according to claim 1, wherein the displaying, at a second moment in response to the electronic device being flipped, a second preview interface of the camera application on the second screen when the first preview interface is displayed on the first screen comprises:
in response to the electronic device being flipped, displaying the second preview interface on the second screen based on the first preview interface comprising the human face image.

3. The method according to claim 1 or 2, wherein the displaying, at a third moment, a third preview interface of the camera application on the first screen when the electronic device is in the folded state comprises:
in response to the electronic device being flipped, displaying the fourth preview interface on the first screen based on the third preview interface not comprising the human face image.

4. The method according to any one of claims 1 to 3, wherein the first preview interface, the second preview interface, the third preview interface, and the fourth preview interface are preview interfaces in a selfie mode, the first preview interface, the third preview interface, and the fourth preview interface do not comprise the image captured by the second camera, and the second preview interface does not comprise the image captured by the first camera; and
the first camera is a front-facing camera, and the second camera is a rear-facing camera; or the first camera is a rear-facing camera, and the second camera is a front-facing camera.

5. The method according to any one of claims 1 to 4, wherein the first preview interface, the second preview interface, the third preview interface, and the fourth preview interface are preview interfaces in a multi-scene video recording mode, the first preview interface, the third preview interface, and the fourth preview interface comprise the image captured by the second camera, and the second preview interface comprises the image captured by the first camera; and
the first camera is the front-facing camera, and the second camera is the rear-facing camera; or the first camera is the rear-facing camera, and the second camera is the front-facing camera.

6. The method according to claim 5, wherein when the rear-facing camera comprises a long-range camera and a short-range camera, the first camera is the front-facing camera, and the second camera is the short-range camera; or the first camera is the short-range camera, and the second camera is the front-facing camera.

7. The method according to any one of claims 1 to 6, wherein the first preview interface is a preview interface in another mode, and the another mode is used to indicate a mode other than the selfie mode and the multi-scene video recording mode; and
the displaying, at a second moment in response to the electronic device being flipped, a second preview interface of the camera application on the second screen when the first preview interface is displayed on the first screen comprises:
in response to the electronic device being flipped, displaying the second preview interface on the second screen based on the first preview interface being the preview interface in the another mode, wherein the second preview interface is a preview interface in the selfie mode.

8. The method according to any one of claims 1 to 7, wherein the method further comprises:
reading, in response to the electronic device being flipped, at least one frame of image from a plurality of frames of images that are captured by the first camera and cached before the flip; and
displaying the second preview interface on the second screen when it is determined that the at least one frame of image comprises a human face image satisfying a preset condition; or
displaying the fourth preview interface on the first screen when it is determined that the at least one frame of image does not comprise a human face image satisfying a preset condition.

9. The method according to claim 8, wherein the plurality of frames of images are cached based on a preset caching mechanism when a shooting mode is the selfie mode or the multi-scene video recording mode, and the preset caching mechanism comprises:
when a quantity of images stored in a first storage unit is less than a preset quantity of the first storage unit, after one frame of image to be cached is obtained each time, storing the frame of image in the first storage unit; or
when a quantity of images stored in the first storage unit is equal to a preset quantity of the first storage unit, after one frame of image to be cached is obtained each time, replacing the frame of image with one frame of image having an earliest timestamp in the first storage unit.

10. The method according to claim 8 or 9, wherein the at least one frame of image is one or more frames of images with a shortest time interval from the flip in the plurality of frames of images.

11. The method according to any one of claims 8 to 10, wherein the preset condition comprises that a quantity of human face images in the at least one frame of image is greater than or equal to a preset value, and/or that a size of a human face in at least one human face image in the at least one frame of image is within a preset threshold range.

12. An electronic device, comprising a memory, one or more processor, and a computer program stored in the memory and capable of running on the one or more processor, wherein when the one or more processor execute the computer program, the electronic device is enabled to implement the method according to any one of claims 1 to 11.

13. A computer-readable storage medium, wherein the computer-readable storage medium stores a computer program, and when the computer program is executed by an electronic device, the method according to any one of claims 1 to 11 is implemented.
